# EUROPEAN PATENT SPECIFICATION

(11) **EP 3 166 769 B1**
(45) Date of publication and mention of the grant of the patent: **30.12.2020**
(21) Application number: 15753770.5
(22) Date of filing: 10.07.2015
(51) Int. Cl.: B29C 44/30

(54) **METHOD AND APPARATUS FOR CONTINUOUS FOAMING OF A PANEL**
VERFAHREN UND VORRICHTUNG ZUR KONTINUIERLICHEN AUFSCHÄUMUNG EINER PLATTE
PROCÉDÉ ET APPAREIL POUR LE MOUSSAGE EN CONTINU D'UN PANNEAU

(30) Priority: 11.07.2014 IT MI20141266
(43) Date of publication of application: 17.05.2017
(73) Proprietor: Cannon S.p.A., 20121 Milan (IT)
(72) Inventor: VOLPATO, Marco, 20121 Milan (IT); BONANSEA, Alberto, 20121 Milan (IT)
(74) Representative: Candito, Rocco
(86) International application number: PCT/IB2015/055227
(87) International publication number: WO 2016/005951

(56) References cited:
- DE-C- 859 122
- GB-A- 1 210 513
- US-A- 3 530 029
- US-A- 3 874 833
- US-A- 4 264 291

## Description

### BACKGROUND OF THE INVENTION

The present invention relates to a method and an apparatus for continuous foaming of a panel of the type comprising outer layers of web material between which an intermediate layer of insulating foam is interposed.

Panels of this type are used in many fields of application, for example to make thermal insulation for residential or industrial buildings, to make External Thermal Insulation Cladding Systems, to make thermally insulating roofs or covers, to construct internal dividing walls of buildings, to clad attics, to manufacture refrigerator cells, insulated doors, refrigerator benches and for other applications.

### PRIOR ART

Apparatuses are known for the continuous production of expanded polyurethane panels. One known apparatus for the production of a continuous panel comprises a lower belt conveyor and an upper belt conveyor that are mutually spaced apart to bound a foaming area that extends horizontally along a horizontal advancement direction and which has width and thickness dimensions corresponding to these of the panel to be obtained.

The upper and lower belt conveyors each comprise a belt element wrapping around a respective pair of driving rollers located at the ends, rotating around respective horizontal axes. With each conveyor a device for supplying a web material is associated.

The upper and lower conveying belt elements run along respective horizontal guides by means of which they contrast the pressure of the foam and maintain in position the respective layers of web materials intended to form the outer surfaces of the panels.

A first continuous web material, in particular of paper, textile, plastics or metal, which is intended to define an outer face or layer of the panel, is unwound continuously from a respective reel, is rested on the upper surface of the lower belt conveyor, and is advanced together with the latter along the advancement direction.

Similarly, a second continuous web material, for example of paper, textile, plastics or metal, intended to define the other outer face or layer of the panel, is unwound continuously from a further respective reel and, restingly placed on the lower surface of the upper belt conveyor, is advanced together with the latter along the advancement direction.

A dispensing-distributing device is provided that pours on the first lower web material a layer of a polyurethane or phenol mixture. This layer of a polyurethane or phenol mixture expands progressively freely until the resulting polyurethane or phenol foam comes into contact with and adheres to the second upper web material that moves parallel to and at the same speed as the underlying and spaced apart first web material.

The aforesaid dispensing-distributing device can be of movable type, i.e. can be configured to move alternatingly transversely to the advancement direction of the lower web material.

Alternatively to the aforesaid dispensing-distributing device of movable type, a dispensing-distributing device of fixed type can be used, i.e. be placed in a stationary position, provided with a plurality of dispensing holes that are distributed in a direction that is transverse to the advancement direction substantially for almost the entire width of the lower web material.

The dispensing-distributing device of fixed type can comprise a single tubular conduit on which multiple holes are obtained, possibly of variable length and mutual distances, or may comprise several dispensing pipes, for example four or six dispensing pipes arranged mutually parallel longitudinally with respect to the advancement direction of the web materials and mutually spaced apart along the width of the web materials. Such dispensing pipes are associated, for example in pairs, with corresponding mixing heads.

In order to obtain a qualitatively acceptable panel it is indispensable, during dispensing of the polyurethane or phenol mixture, to avoid incorporating air bubbles or vacuoles in the interface between the upper web material and the underlying layer of mixture. For this purpose, it is necessary to ensure that on the lower web material a thin layer of reactive mixture is deposited as evenly as possible, both longitudinally and transversely.

Currently, the advancement speeds at which the aforesaid web materials are moved during the foaming process are comprised between 300 mm/sec to 1000 mm/sec and the width of the panel to be foamed is generally approximately 1200mm.

In the case of the dispensing-distributing device of movable type, at such advancement speeds, and in particular above 400 mm/sec, it is significantly difficult to achieve the aforesaid objective of depositing an even thin layer of resin, i.e. which has the same uniform thickness. In fact, in the case of the dispensing-distributing device of movable type, the following occurs.

The dispensing-distributing device, in the alternating cyclical movement transversely to the advancement direction, near each edge of the lower web material, undergoes in succession, deceleration, stop and reversal of movement with associated acceleration in the opposite direction to reach the opposite longitudinal edge of the lower web material.

The not negligible dwell time during which the dispensing-distributing device remains near the edges of the lower web material, whilst at the same time constant resin dispensing continues for the entire process, is such as to cause a greater accumulation of reagent on the aforesaid edges. Further, the transverse alternating movement, even if it is synchronised with the longitudinal advancement movement, entails dispensing alternately tilted strips of mixture with zones of mutual joining or superimposing, which leads to a distribution that is not uniform and homogenous over the entire lower web material.

On the other hand, if instead of the dispensing-distributing device of movable type the dispensing-distributing device of fixed type disclosed above is used, the following occurs. Both if the single transverse tubular conduit with multiple holes is used and if the plurality of parallel dispensing tubes is used, the reactive mixture is dispensed in the shape of parallel beads.

These beads of reactive mixture, through the effect of the chemical reaction, take on the shape of semicylindrical elements, extending longitudinally, that progressively expand until they touch one another and join together to form alternating valley zones and summit zones.

In other words, the deposited layer of mixture takes on, according to a plane that is orthogonal to the lower web material and to the advancement direction, a corrugated profile that has higher and convex zones and lower mutually joined zones. Such semicylindrical mixture elements that are joined together continue to expand further and in the lower zones or valleys that are joined together air remains.

Subsequently, the air, in contact with the upper web material, generates small bubbles that remain trapped in the valleys between the upper web material and the crust of polyurethane surface that is generated on the foam material during the advanced reaction step, this compromising the qualitative level of the obtained panel.

In order to try to overcome these drawbacks, a dispensing system is sometimes resorted to that uses a dispensing bar provided with a narrow slit that extends over the entire length of the double belt conveyor.

The aforesaid bar is supplied upstream by a channel of triangular shape or by several supply conduits. Nevertheless, even this technical solution is not devoid of drawbacks. In fact, the aforesaid narrow slit of the dispensing bar tends to become blocked rapidly, i.e. after a few minutes of use, starting from the end zones, because of the formation of a thin layer or boundary layer of polyurethane that gradually solidifies. This naturally alters the correct distribution of the layer of mixture, consequently compromising the quality of the panel obtained.

From US4264291 an apparatus is known for foaming a panel, comprising a horizontal conveyor, a tilted table located upstream of the conveyor, a device for dispensing the foaming mixture, and a distributing device spaced apart from and parallel to the aforesaid table to define a gap of constant thickness. A lower web material that is progressively unwound is advanced on the tilted table and then on the horizontal conveyor. An upper web material, simultaneously, advances through the distributing device parallel to the lower web material along the portion that extends on the tilted table. Along the aforesaid gap, the two upper and lower web materials advance mutually parallel at a distance that is maintained constant for the entire tilted portion of path.

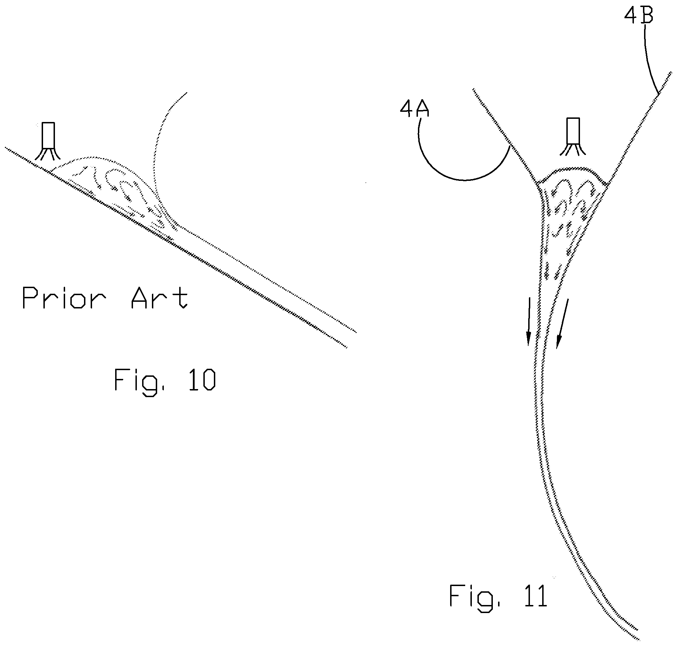

The mixture is poured directly onto the lower web material in a zone located further upstream than the spaced distributing device. In this manner, the mixture first wets the lower web material, and only in a subsequent moment does the lower web material come into contact with the upper web material, thus after a certain interval of time from the start of the chemical reaction. Figures 10 shows the asymmetry with which the liquid reactive mixture is remixed and advanced: the mixture part nearest the lower web material is dragged further than the remaining part of upper resin mixture. The resin that accumulates near the narrowed part between the two web materials is not pushed back symmetrically. A rolling condition occurs of a part of the resin in the heart of the accumulating zone near the narrowed part: this rolling resin part remains in the zone for a much longer time (even 2 to 4 times the required time), so long that it reacts by forming lumps that make this device very critical to use and thus compromise the quality of the panel obtained.

The mixture slides towards the side zones essentially through the effect of accumulation and sliding by gravity. A very high accumulation in volume of resin is required in order to obtain the piezometric head necessary for promoting this sliding towards the side zones and this makes the process very difficult.

This dissymmetry in the mixture wetting conditions, leads to mechanical and physical features of the foamed panel being obtained that are not uniform and homogeneous, but different from zone to zone, in particular along the thickness. After travelling along the tilted portion and to the outlet of the gap, the lower web material continues the horizontal advance resting on the conveyor, whilst the upper web material, without any upper support, is left free to advance and rise through the effect of the thrust of the underlying foam that expands. Further, in the transit of the tilted table to the horizontal conveyor, the surface on which the panel being produced slides undergoes a rather sudden change of direction that can adversely affect the correct expansion of the foam, making the foam, for example, collapse on the surface. In particular, at the points, i.e. with a reduced curvature radius of the path, stretching of and collapse of the cells occur, which forms a crust in contact with the surface and cells of greater dimensions. This leads to cell formation that is not even that adversely affects the mechanical features (resistance to compression and shear) and above all thermal insulation capacity.

There according exists ample room for improvement of the foaming system disclosed in US4264291.

Another apparatus is known from US3530029

It discloses a method for continuous foaming of a panel of the type comprising outer layers of web material between which an intermediate layer of insulating foam is interposed, comprising the steps of:- supplying a first web material and a second web material, which are precursors of said outer layers, according to respective mutually converging directions to a dispensing station for dispensing liquid reactive mixture having a density intended for generating said intermediate layer of insulating foam; - maintaining, by guiding and resting means, said first and second web materials continuously advancing and oriented according to planes that tilt mutually and converge downwards so as to bound a V-shaped hopper zone, placed below said station for dispensing reactive mixture; - moving, said first and second web materials progressively closer to one another so as to define, in a bottom region of said hopper zone, a calibrated slit for dragging said reactive mixture in the sliding direction with simultaneous squashing and distribution of said reactive mixture to opposite sides of the dispensing zone; - dispensing said reactive mixture so as to fill at least partially said hopper zone to wet said first and second web materials advancing progressively downwards; - advancing continuously and synchronously said first and second web materials downstream of said hopper zone along a portion of a foaming path so as to drag said reactive mixture progressively downwards; - supplying, along said vertical portion a continuous guiding and resting action to said first and second web materials so as to advance the first and second web materials substantially parallel to one another and spaced apart from one another at a controlled distance,- diverting, downstream of said first vertical or very tilted portion, said first and second web materials along a successive curved portion of said foaming path until a horizontal or slightly tilted lying plane is reached, in which along said curved portion a guiding and resting action is provided below said first web material; - clamping the web materials,by a pressure action of elastic seal means; - guiding, downstream of said curved portion, said first web material along a first resting and guiding plane, arranged horizontally and said second web material such that said first and second web materials advance in a mutually divergent manner at a growing distance from one another along a transition portion of said foaming path along which a guided expansion of said reactive mixture develops; - conveying, and supplying a resting action to, said first and second web materials, with the interposed expanding foam, along a final portion, substantially horizontal, of a path to enable the foam reaction to be completed and the shape of the foam to be stabilised; mutually adjusting in position said guiding and resting means for setting, at said calibrated slit, a distance between the inner surfaces of said first and second web materials, according to a desired thickness and a final density of said intermediate layer of insulating foam that it is desired to obtain. It also discloses a corresponding apparatus.

DE859122 discloses another foaming apparatus, which, similarly to the known system that has just been disclosed, is unable to provide, in a satisfactory manner, homogeneous distribution of the expanding foam.

It would be desirable to dispose of a method and an apparatus that is able to improve in general the quality of obtained panels, in particular by acting effectively on the distribution and guiding of the mixture during expansion so as to ensure homogeneous physical and mechanical properties along all the dimensions of the product obtained.

### OBJECTS OF THE INVENTION

An object of the present invention is to improve the methods and apparatuses for continuous production of panels, in particular for foaming panels of composite type with flexible coating faces, i.e. panels that comprise pairs of outer layers of non-stiff web material at the moment of dispensing of the foam, between which layers of intermediate insulating layers are interposed that are made of expanded polyurethane or phenol material.

In particular, one object of the invention is to provide a method and apparatus that enable the quality of the panels to be improved that are obtained by foaming, in particular that enable the formation of irregularities to be prevented that are due to the presence of trapped air bubbles and vacuoles.

### SHORT DESCRIPTION OF THE INVENTION

The above is achievable by a method and a respective apparatus, for foaming panels as defined in claim 1 and in claim 10 respectively.

The features and advantages will be set out in the appended claims and in the description and attached drawings.

Owing to the invention, the aforesaid drawbacks are overcome.

### SHORT DESCRIPTION OF THE DRAWINGS

The invention can be better understood and implemented with reference to the attached drawings that illustrate some embodiments thereof by way of non-limiting example, in which:
Figures 1 is a schematic and fragmentary side view of a first embodiment of the apparatus according to the invention;
Figure 2 is a schematic and fragmentary side view of a second embodiment of the apparatus according to the invention;
Figures 3 is a perspective view of part of the apparatus of the invention made according to a third embodiment;
Figure 4 is a side view of the apparatus in Figure 3;
Figure 5 is a view taken along the plane V-V in Figure 4;
Figure 6 is a view taken along the plane VI-VI in Figure 5;
Figure 7 is a view taken along the plane VII-VII in Figure 4;
Figures 8 and 9 show schematically, respectively prospectively and in cross section, the apparatus according to the invention in which elastic seal means for containing laterally the reactive mixture between the two upper and lower web materials are visible;
Figures 10 and 11 show schematically the run of the reactive mixture between two web materials respectively in a prior-art apparatus and in the apparatus according to the invention.
Figures 12 shows schematically the manner of spreading in a horizontal direction of the reactant resin poured between the two web materials in the apparatus according to the present invention.

### DETAILED DESCRIPTION OF THE INVENTION

With reference to the attached Figures, there is shown an apparatus 1 for continuous foaming of a panel 2 of the type comprising a pair of outer layers 3A, 3B, of web material, between which an intermediate layer 5 in expanded and insulating polyurethane or phenol material is formed.

The intermediate layer 5 is obtained from a reactive mixture that can be a polyurethane mixture, obtained from a polyol or from a polyisocyanurate and an isocyanate, or a phenol mixture obtained from a mixture of phenol resin and an acid.

Depending on the final product desired, the components of the mixture can contain other ingredients such as, catalysts, expanding agents, flame-retardant substances, fibres and/or reinforcing powders or other ingredients.

The web materials that define the outer layers 3A, 3B of the panel 2 can comprise paper, plastics, metal lamina, textile and other possible materials of flexible type.

The panels 2 obtained by the apparatus 1 and the method according to the invention can be applied in many different fields.

For example, the panels 2 that are obtainable with the method and apparatus 1 according to the present invention can be used for making thermal insulation in both residential and industrial buildings, to make External Thermal Insulation Cladding Systems, to make thermally insulating roofs or covers, to construct internal dividing walls of buildings, to clad attics, to manufacture refrigerator cells, insulated doors, refrigerator benches and for other applications.

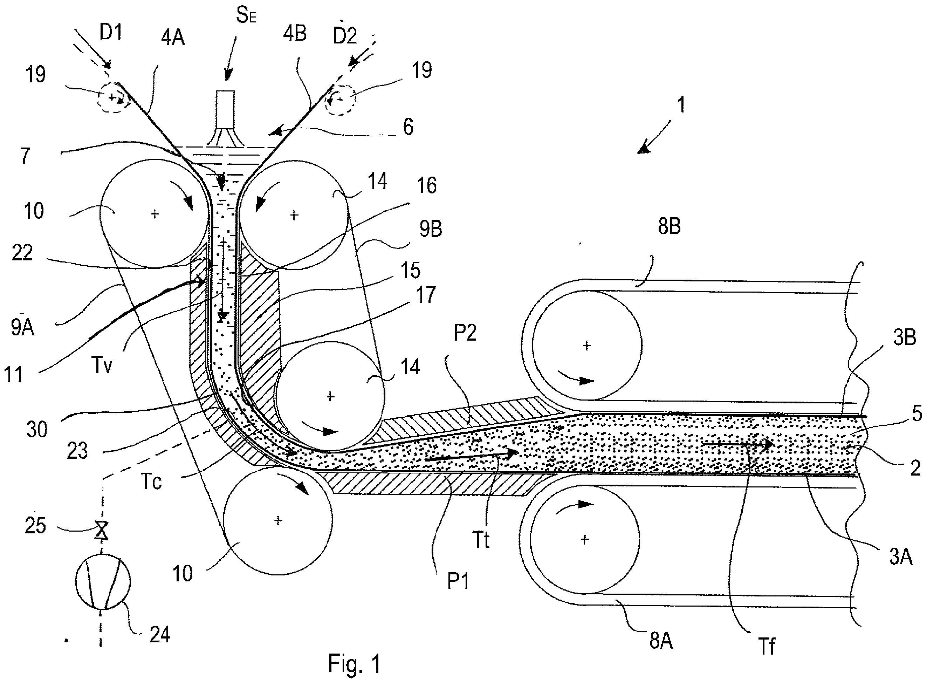

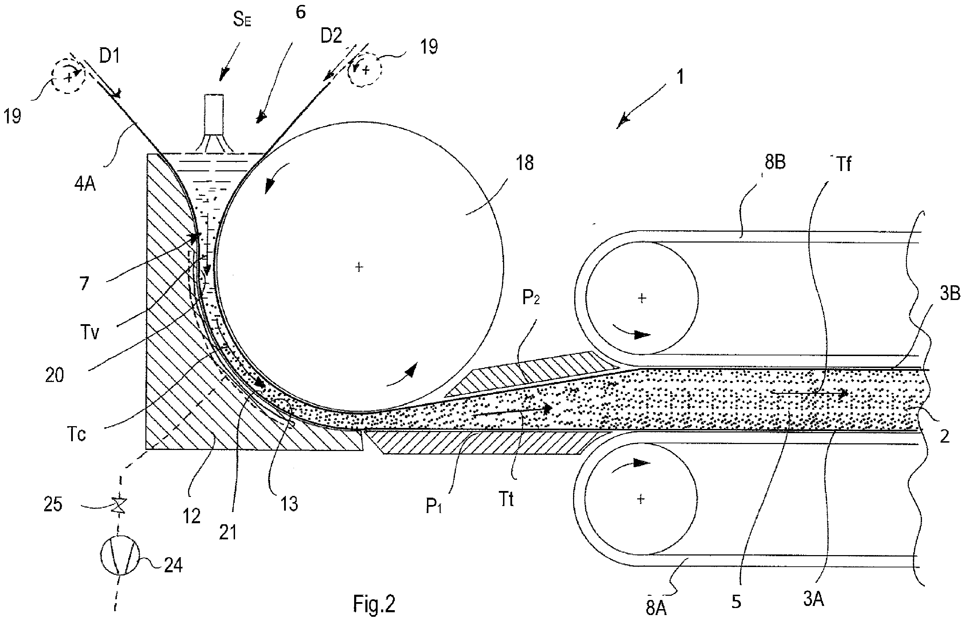

As shown in attached Figures 1 and 2, the apparatus 1 comprises a station S_{E} comprising one or more mixing heads for dispensing reactive mixture intended for generating the intermediate layer 5 of insulating foam of the panel 2, and supplying means 19 for supplying a first web material 4A and a second web material 4B intended for defining the outer layers 3A, 3B of the panel 2. In one of the liquid reactive resins that are mixed before being dispensed, a desired percentage quantity in volume (η) of pressurised air or pressurised liquefied gas can be emulsified, for example CO2. Alternatively to CO2, isobutane can be chosen or various types of freon such as CHFC, HFC and HFO, which are dissolved in the resin before being mixed with the reagent.

Adding air or low-boiling gases gives rise to the aforesaid "frothing" effect, i.e. makes the deposited resin mixture froth already at the start, enabling wetting of the web materials (4A, 4B) that are for example made of paper or of another material to be limited, preventing the resin mixture from penetrating in liquid state and impregnating the web materials (4A, 4B). This advantageously entails a great saving of expanding material.

The supplying means 19 are configured for supplying the first 4A and second 4B web materials to the station S_{E} in the respective mutually converging directions D1 and D2. In other words, webs of web material, unwound from respective reels, advance towards one another in tilted directions determined, for example, by rollers 19, as they approach the conveying station S_{E}.

As disclosed below, the apparatus 1 is configured with suitable guiding and resting means so as to define, for the first 4A and second 4B web materials, a foaming path that initially comprises a very steep, substantially vertical or very tilted portion Tv which is followed below by a curved portion Tc, which is in turn followed by transition portion Tt almost horizontal or slightly tilted. It must be emphasised that, unlike known systems for foaming panels, the apparatus 1 provides a continuous guiding and resting action, thus geometrical control of the panel, also along the curved portion Tc, not just along the rectilinear portions. Further, the curvature radius of this curved portion Tc is optimised according to the process features and dimensional and shape parameters of the panel being obtained. A wide curvature radius as in the present apparatus, for example greater than 100 mm, prevents undesired reciprocal sliding of the flexible surfaces and stretching of the cells of the foam and a collapse thereof into larger cells, unlike some apparatuses of the prior art that have points of sudden folding (reduced curvature radiuses), in which this phenomenon is on the other hand inevitable. In the apparatus according to the invention, on the other hand, a homogeneous and round cell structure is obtained with immediate advantages in the mechanical compression and shear features and above all in thermal insulation capacity.

The foaming path comprises, downstream of the transition portion Tt, a final portion Tf, substantially horizontal, of a path in which the reaction is completed and the shape of the foam of the panel is stabilised.

The apparatus 1 comprises guiding and resting means configured for arranging and maintaining the first 4A and second 4B web materials according to respective determined lying planes. In particular, the upper guiding means for the flexible web materials, in particular the rollers 19 are configured to maintain the web materials 4A and 4B oriented according to planes converging downwards so as to bound, in a zone below the station S_{E}, a V-shaped hopper zone 6 converging downwards.

With reference to the embodiment of Figure 1, further guiding and resting means comprises a first movable belt device 9A that is suitable for guiding the first lower web material 4A.

The first movable belt device 9A comprises a flexible movable element, in particular a continuous belt, wound to rotating driving means 10 placed at opposite ends.

The belt of the first movable belt device 9A is made in such a way that it offers a continuous flexible support and can comprise a belt made of steel or another metal of suitable thickness or of plasticised cloth or can be defined by narrow slats interconnected by foldable hinges (slats in the form of rolling shutters), or another suitable component or flexible material.

Shaped guiding elements 11 are provided that are suitable for engaging slidably with the edges of the guiding belt 9A to impose on the latter a determined shape profile during advancement.

More precisely, the guiding elements 11 comprise a vertical or very tilted rectilinear portion 22 to impress on the movable belt device 9A a rectilinear profile at the aforesaid vertical portion T_{V} of path, and a lower curved portion 23 to impress on the movable belt device 9A a concave curved profile that can be divergent at the aforesaid curved portion Tc. The portion 22 can on the other hand be vertical, can also be tilted, in particular tilted by +/- 25° with respect to a vertical plane.

The thrust of the reactive mixture may be sufficient to maintain the first web material 4A adhering to the movable belt device 9A. Nevertheless, in one embodiment, on the guiding and resting belt 9A openings can be obtained through which it is possible to maintain a vacuum on the outer face 30 of the lower web by means of a vacuum generating device that can comprise a pump 24 coupled with a valve 25 for adjusting the flow of sucked air and controlling rotation speed. The air suction enables a given vacuum to be obtained on the guiding and resting belt 9A.

The aforesaid vacuum has the function of maintaining the first web material 4A adhering, during movement, to the guiding and resting belt 9A.

The guiding and resting means further comprises a further movable belt device 9B, for providing a continuous support and guiding the second web material 4B along the entire path downwards.

The further movable belt device 9B comprises a respective flexible movable element, in particular a continuous belt, wound to respective rotating driving means 14 placed at opposite ends.

The web of the further flexible movable belt device 9B can comprise a belt made of steel or another metal of suitable thickness or a belt of plasticised cloth can be defined by narrow slats interconnected by foldable hinges (slats in the form of rolling shutters), or another suitable component or flexible material.

A stationary contrasting element 15 is provided that restingly receives and confers a desired profile to the flexible element, or movable belt of the movable belt device 9B. The aforesaid stationary contrasting element 15 includes a flat surface portion 16, at the vertical or very tilted portion T_{V}, and a convex surface portion 17, at the curved portion Tc of path.

The guiding and resting means can comprise, instead of the lower movable belt device 9A, a resting and guiding element 12 that is stationary and suitably shaped, as shown in Figure 2.

The stationary resting and guiding element 12 comprises a guiding and resting surface 13 having a substantially flat upper zone 20, for guiding the first web material 4A along the vertical or very tilted portion T_{V} of path, and a lower concave zone 21, for guiding the first web material 4A along the curved portion Tc of foaming path.

The thrust of the reactive mixture can be sufficient to maintain the first web material 4A adhering, during the corresponding sliding, to the stationary resting and guiding element 12. Nevertheless, in one embodiment, on the guiding and resting surface 13 openings can be provided through which a vacuum is applied through suction of air to maintain the first web material 4A adhering, during sliding, to the stationary resting and guiding element 12.

Sucking of air is possible by means of a vacuum generating device, comprising a pump 24 coupled with a valve 25 and a device for adjusting the speed of the pumping element for adjusting sucked air flow, as already mentioned above.

The guiding and resting means can comprise, instead of the upper movable belt device 9B disclosed above, a roller element 18 or a rotatable drum that is suitable for supplying a guiding and resting action to the second 4B web material, as shown in Figure 2. In this case, the roller or drum element 18 has dimensions that are such as to extend substantially from the hopper zone 6 to near the transition portion Tt. In other words, the drum element 18 has a radius that is much greater than the radiuses of the driving wheels 14 in the case of the movable belt device 9B.

The axis of the drum can be moved by an amount that is appropriate for defining the vertical meatus in a horizontal direction and as far a tenth of the radius in a vertical direction to give the curved path a divergent run. Similarly, the second movable belt device 9B and/or the first movable belt device 9A are adjustable to define a reciprocal position that is such as to obtain a desired geometry of the meatus, possibly also giving a run with a meatus thickness increasing downwards, i.e. a calibrated slit 7 diverging downwards.

Both the first movable belt device 9A and the movable 18 second belt device 9B are driven by respective motors to synchronise the speed with that of the foaming plant.

On the sides of the drum 18 and of the belt device 9B seals or cuffs are mounted to press the two webs of paper, textile, plastics or metal, and prevent the exit of the liquid resin when it is squeezed, i.e. pressed, until it reaches the opposite end sides totally, or almost totally. In practice, the resin can be squeezed until it is able to reach a minimum distance from the sides of edges of the webs, which are then reached by the resin through the expansion due to the chemical reaction. Nevertheless, the joined edges of the web materials can be sealed together and the resin can be squeezed to distribute the resin in such a manner that it reaches the edges of the webs of paper, immediately, even without waiting for the expansion.

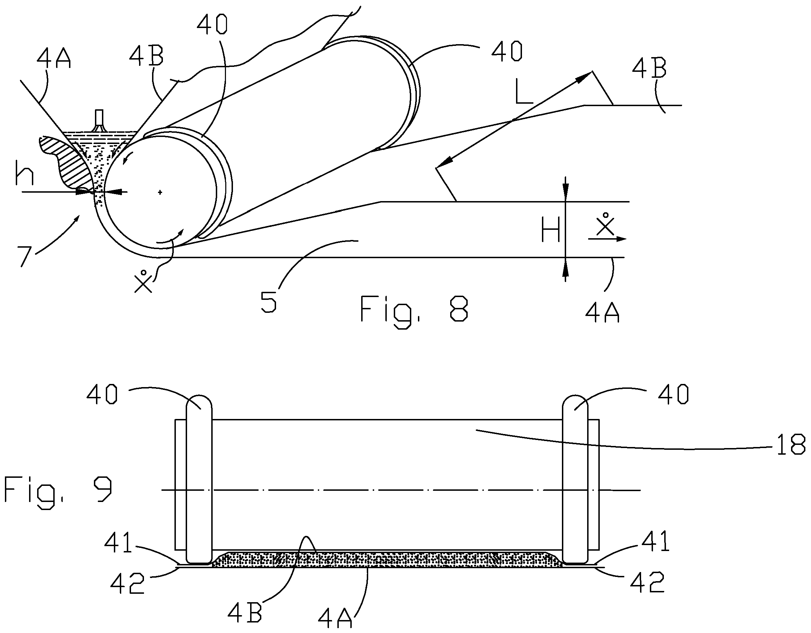

In Figures 8 and 9 there are shown, in schematic form, the elastic seals 40 housed in peripheral throats of the drum 18. Similarly, it is possible to provide the elastic lateral sealing and containing seals also on other apparatus embodiments. The seals 40 can also be inflatable or pneumatic, or hollow or solid, be of rubber or of soft elastomer (hardness value below 65 shore). The seals 40 act to press each longitudinal edge 41 of the second web material 4B against the respective longitudinal edge 42 of the first web material 4A, achieving in this manner the seal and lateral containing of the reactive mixture.

The various embodiments of guiding and resting means with reference to Figures 1 and 2 can be combined together in a desired manner. For example, in the embodiment in Figure 2, the apparatus 1 can comprise, instead of the stationary resting and guiding element 12, the movable belt device 9A shown in Figure 1.

In all the embodiments disclosed above, the guiding and resting means (19, 9A, 10, 9B, 14; 12, 18), are configured so as to arrange and maintain the first 4A and second 4B web materials, near the dispensing station S_{E}, according to planes converging downwards so as to bound the hopper zone 6 in a V shape converging downwards.

The web materials 4A and 4B, during dragging and advancement, are, moved by the guiding and resting means (19, 9A, 10, 9B, 14; 12, 18) progressively towards one another so as to define, in a bottom region of the hopper zone 6, a calibrated slit 7 for dragging the reactive mixture with squeezing and distribution to the opposite longitudinal sides.

It must be emphasised that the calibrated slit 7 is configured for containing a thickness of resin in liquid form that subsequently expands to reach a further thickness that is from 15 to 38 times greater. The calibrated slit 7 can thus vary from a dimension equal to 0.8 mm for a final thickness of 30 mm to a dimension of 16 mm to obtain a panel having a thickness of 250 mm. Further below, the manner will be disclosed with which the calibrated slit 7 is adjusted, or rather the distance between the mutually facing surfaces of the first 4A and second 4B web materials.

The curved portion of the path has a gap with a thickness that is variable from 0.8 to 20 mm by means of a movement of the axis of the roller. The transition portion Tt downstream of the curved portion is almost horizontal or is at least tilted by +/- 25 degrees with respect to a horizontal plane.

The head or the mixing heads of the station S_{E} act to fill at least partially the hopper zone 6 with the aforesaid reactive mixture so as to wet simultaneously the first 4A and second 4B web materials. The guiding and resting means (19, 9A, 10, 9B, 14; 12, 18) is configured in such a manner as to obtain simultaneous and symmetrical wetting of the two web materials 4A, 4B. In other words, the reactive mixture simultaneously and symmetrically wets the respective zones of the web materials 4A, 4B facing one another that progressively reach the hopper zone 6. This advantageously results in obtaining better homogeneity of physical features of the panel obtained than what occurs in known foaming systems, where the resin is often poured directly onto one of the two web materials and only subsequently, when the reaction has started, does the resin come into contact with the other web material, causing in this manner asymmetry in the distribution of the expanding foam and thus non homogeneity of the mechanical and physical features of the panel obtained.

The guiding and resting means (19, 9A, 10, 9B, 14; 12, 18) are further conformed for advancing the first 4A and second 4B web materials substantially parallel to one another at a controlled distance from one another along the vertical or very tilted portion T_{V} of path. Further, the reciprocal position of the guiding and resting means (9A, 10, 9B, 14; 12, 18) is adjustable to enable a mutual distance between the web materials 4A and 4B along the vertical or very tilted portion T_{V} of path to be adapted according to the features of the reactive mixture used and/or parameters to be taken into account such as the flow and the speed of the foaming plant and the reaction speed of the foam and other parameters.

The apparatus 1 comprises suitable belt devices with a C-shaped section that operate along the vertical portion Tv to maintain pressed together the edges of the first web material 4A and the respective edges facing the second web material 4B.

Downstream of the vertical or very tilted portion Tv, the guiding and resting means (9A, 10, 9B, 14; 12, 18) are shaped to impose on the web materials 4A, 4B, a suitable diversion following a curved path that is parallel or slightly divergent having a suitable curvature radius that is a function of the mechanical features of the web materials 4A, 4B, and of the properties of the expanding mixture. Owing to the configuration of the guiding and resting means (9A, 10, 9B, 14; 12, 18) that provides a continuous rest and guide to the web materials 4A, 4B also in the curved portion of path, a perfect dimensional and geometrical configuration is ensured for the panel that is extending progressively.

The apparatus 1 comprises, downstream of the guiding and resting means (9A, 10, 9B, 14; 12, 18), a first resting and guiding plane P₁, arranged horizontally or slightly tilted that is suitable for guiding and slidably supporting the first web material 4A, and a second resting and guiding plane P₂ that is suitable for providing a resting action and slidably guiding the second web material 4B.

The second resting and guiding plane P₂ is tilted with respect to the first resting and guiding plane P₁ so as to advance the first 4A and second 4B web materials in a mutually divergent manner at a growing distance from one another along the transition portion Tt of the foaming path. This enables the expansion of the reactive mixture to be "accompanied", controlling the increase in thickness of the panel 2. Owing to this "accompanying action" provided along the transition portion Tt by the first resting and guiding plane P₁ and by the second resting and guiding plane P₂ - and which is not discoverable on the other hand in known foaming systems - panels of higher quality from the structural and dimensional point of view are obtained.

In the apparatus 1, a pair of conveying devices 8A, 8B is further included, the conveying devices 8A, 8B being spaced apart from one another and parallel, movable at the same speed to advance the panel 2 being produced and thus dragging the web materials 4A and 4B.

The lower 8A and upper 8B conveying devices move at the same speed, which is synchronised with the driving speed of the belt devices 9A and 9B.

The different conveying and advancement devices are synchronised with one another so as to supply the web materials 4A, 4B at the appropriate speed, also controlling the pull.

The lower 8A and upper 8B conveying devices, of the continuous belt type or of the mutually interlinked tile type, are suitable for conveying and supplying a resting action to the first 4A and second 4B web material, with interposed expanding foam, along the final portion Tf of path in which the reaction is completed and the shape of the foam is stabilised.

Means is also provided for turning upwards the longitudinal edges of said lower web material 4A along the final portion Tf of path for containing laterally the expanding reactive mixture.

The opposite edges of the lower web material 4A made of paper or plastics or of another flexible material are held in position folded and oriented upwards by a lateral tab or flap fixed to the belt or to the tiles of the conveying devices 8A.

Alternatively, lateral containment is obtained by means of strips of paper or plastics and or of another flexible material that are unwound from side reels and held in position by side track links or equivalent lateral containing means.

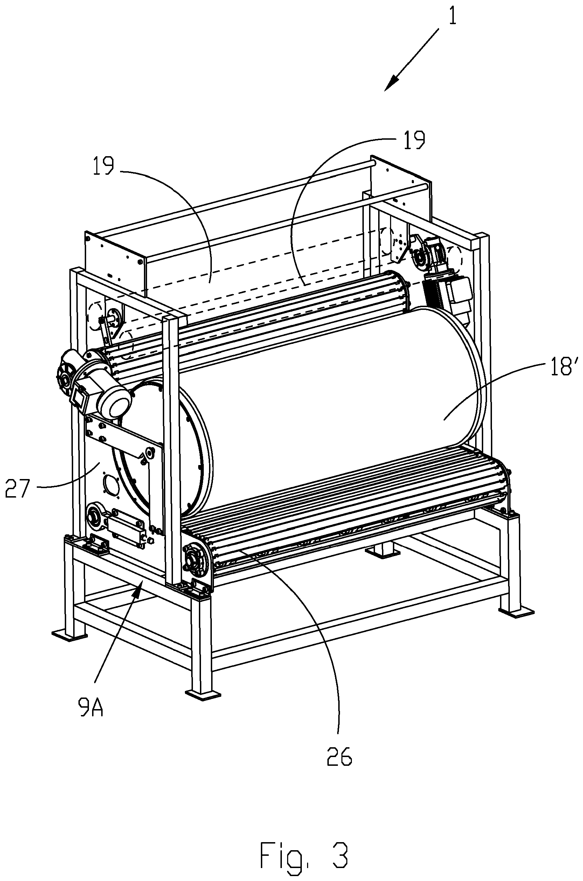

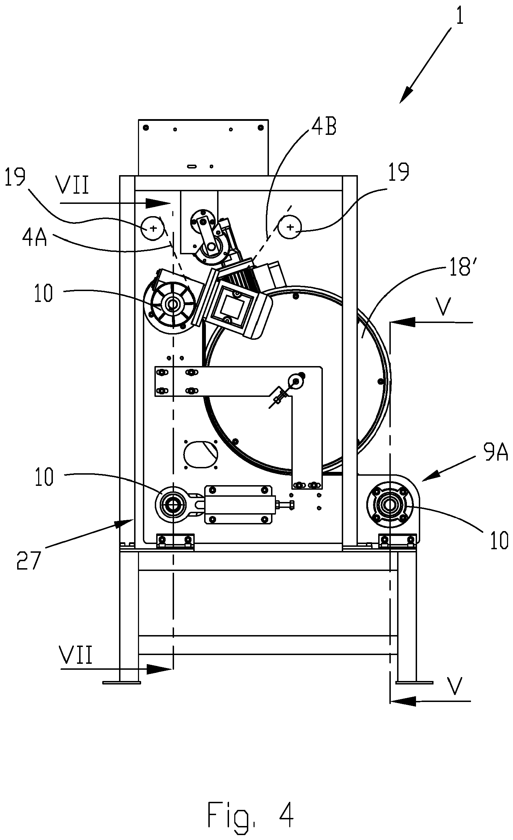

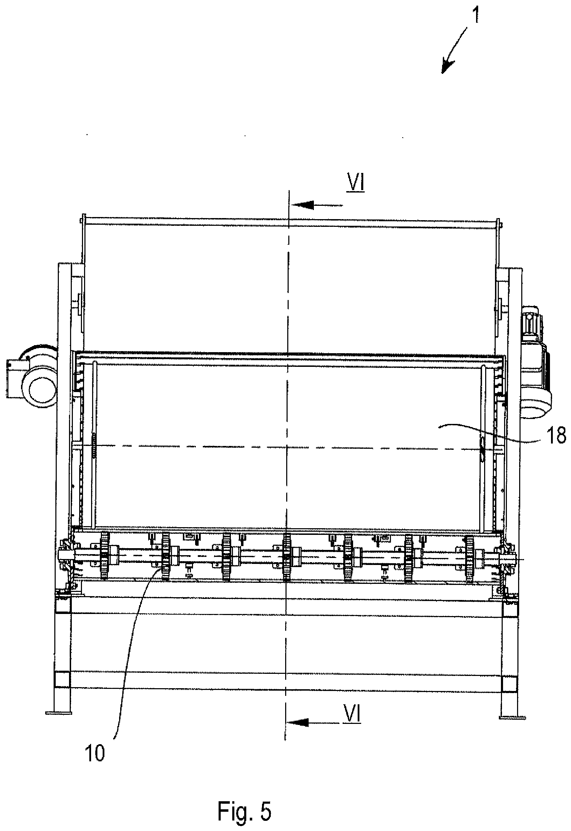

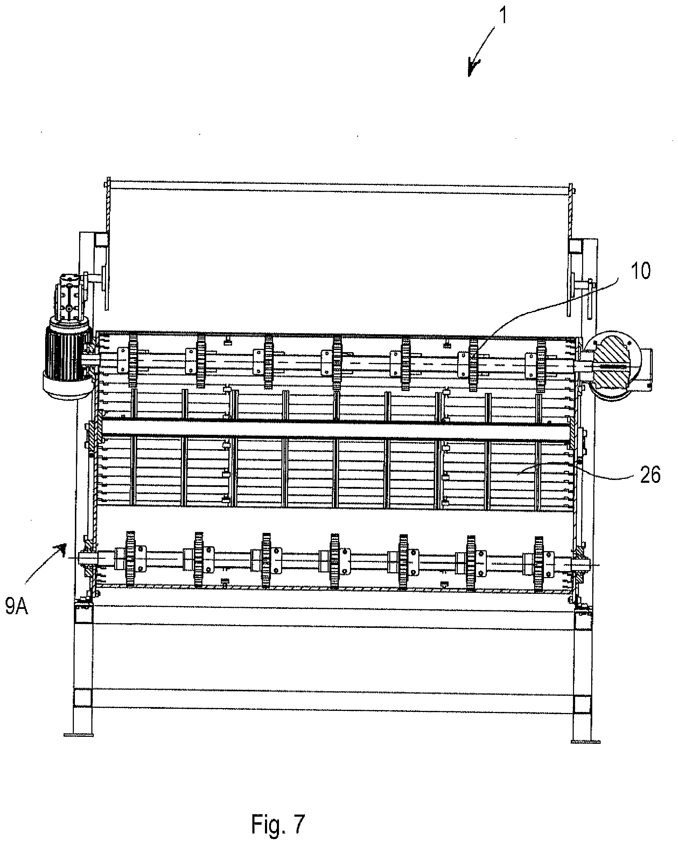

Figures 3 to 7 show another embodiment of the apparatus 1 the differences of which from the embodiments disclosed above are set out below. Only the part upstream of the system is shown and disclosed; the remaining part of the system that extends substantially horizontally is configured identically to what has already been disclosed for the embodiments of Figures 1 and 2, to which reference can be made.

The embodiment of apparatus 1 shown in Figures 3 to 7 comprises guiding and resting means that include, similarly to the embodiment of Figure 1, a first movable belt device 9A that is suitable for guiding the first lower web material 4A.

The first movable belt device 9A comprises a continuous guiding and advancement web 26 that is wound to rotating driving means 10, in particular three wheel elements 10 placed at the top of a supporting structure 27 that has a substantially triangular section.

The belt 26 of the first movable belt device 9A is defined by stiff mutually articulated elements, for example of the slats type. Alternatively, the belt of the first movable belt device 9A is defined by a single belt element made of flexible material. Also this embodiment of apparatus 1 comprises a guiding element 11 that is suitably shaped for engaging slidably with the edges of the guiding belt 26 to impose on the latter a set shape profile during advancement.

The roller element 18' and the guiding and advancement belt 26 are synchronised with the speed of the system downstream (i.e. with the lower and upper conveying devices 8A, 8B), so as to supply the web materials 4A, 4B (e.g. paper) at the appropriate speed, also controlling the pull on the web materials by the conveying devices 8A, 8B.

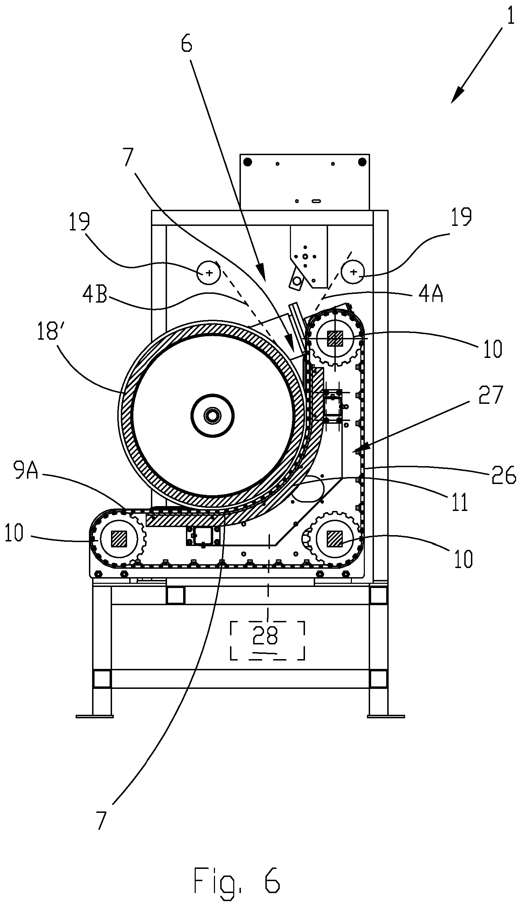

Vacuum generating means 28, or means 28 for generating a certain level of vacuum are provided (schematised in Figure 6) that acts to maintain reduced pressure inside the supporting structure 27. The presence of suitable through openings for transmitting the vacuum provided for on the belt 26 ensures that the web material 4A during advancement adheres perfectly to the advancement guiding belt 26. The vacuum generating means 28 comprises a pump coupled with a valve for adjusting the flow of sucked air and means for adjusting the speed of the pump, in a completely similar manner to what has been disclosed for the embodiment of Figure 1.

In this embodiment of an apparatus 1, the resting means includes, similarly to the embodiment of Figure 2, a first unwinding guiding roller 19 and a second roller element 18' or a rotatable drum that is suitable for supplying a guiding and resting action to the second web material 4B. The roller or drum element 18' has dimensions that are such as to extend substantially from the hopper zone 6 to the lower height of the web materials path.

This apparatus 1 performs various functions. A first function is that of squeezing, or rather flattening, to opposite zones or sides of the pouring zone and of the webs the mixture that has just been poured so as to distribute the mixture over the entire length of the web materials 4A, 4B (e.g.: webs of paper). For this function also a further two rollers can be used that are located in a zone located above the inlet of the web materials to the apparatus 1.

The apparatus 1 further performs the function of clamping the edges of the two web materials 4A, 4B between the roller element 18' and the guiding and advancement belt 26 by a seal that is flexible or inflated with gas located on the two sides of the roller element 18' so as to prevent the resin being able to escape through the effect of the squeezing action.

The central shaft of the roller 18' can be adjusted so as to create a slightly divergent meatus whilst maintaining the squeezing action of the perimeter flexible seal.

Both the roller 18' and the first movable belt device 9A, or equivalent, are provided with drives that synchronise the speed thereof with that of the downstream part of the apparatus.

The operation of the apparatus 1 is disclosed below.

First, a precalibration step is conducted of the distance h between the inner surfaces of the two web materials 4A and 4B, by means of a relation that has been devised to take account of certain significant parameters. In particular, the aforesaid distance h is adjusted according to the thickness H and the density ρp of the insulating intermediate layer 5 of the final panel, i.e. of the final thickness of the panel excluding the outer covering layers generated by the web materials 4A, 4B. In the determination of the distance h, also the volume percentage of air η emulsified in the mixture of liquid resin and the density of the mixture of liquid resin ρl are taken into account.

Finer adjustment can occur during operation of the apparatus.

It is sometimes useful to take into account, further to the aforementioned quantity of emulsified air, also the inlet parameters such as the free expansion of foam and the quantity as a mass percentage of "overpacking", i.e. the extra load of resin mixture with which it is intended to run the process of foaming the panel. In this case, starting from a condition of equality between the entry and exit of the mass flows of liquid resin and of expanded foam respectively, a relation is obtained between the distance h between the calibrated slit 7 and the thickness H of the panel net of the external covering web materials 4A, 4B that is as follows: 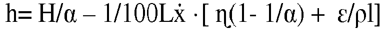 where some parameters coincide with the parameters of the preceding relation, whereas:
L [m] is the width of the panel;
ẋ is the advancement speed that coincides between web materials, liquid and expanding resin, conveying devices and finished panel;
α [m3/ m3] is the indicative parameter of the free volumetric expansion of the foam;
ε [Kg/sec] is the mass percentage of "overpacking".

The web materials 4A and 4B, unwound progressively and continuously from the respective reels advance to the conveying station S_{E} where, thanks to the guiding and resting means (9A, 10, 9B, 14; 12, 18), they are arranged so as to define the V-shaped hopper zone 6.

The mixture is dispensed until it partially fills the hopper zone 6 to a determined level and such that the web materials 4A and 4B, which in the meantime advance continuously, drag the mixture down and, simultaneously, by virtue of the narrowed part, crush the mixture progressively on the sides of the pouring zone and to the edges of the webs, simultaneously, until the entire width thereof is wetted uniformly and homogeneously.

The web materials 4A and 4B act as containing surfaces of the hopper zone 6 that renew themselves continuously by sliding and dragging with themselves downward part of the mixture contained in the hopper zone 6 without including air.

The reactive mixture flows from the hopper zone 6 through the calibrated slit 7 that is defined by the reciprocal position of the web materials 4A and 4B. The reactive mixture is crushed and distributed to the edges of the pouring zone and flows owing to the dragging and crushing action of the web materials 4A and 4B moving downwards. Further, the reactive mixture flows through the calibrated slit 7 also through the effect of gravity.

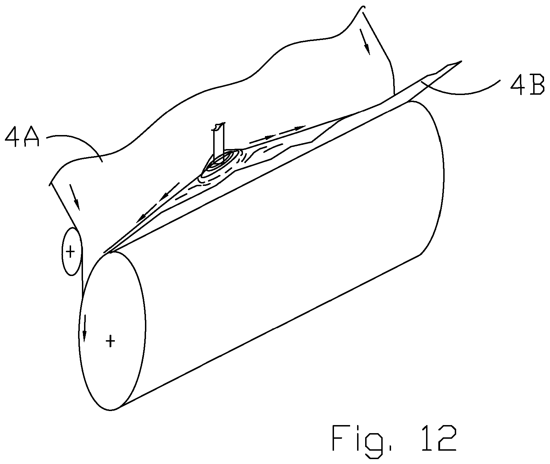

The schematic Figures 11 and 12 show how, in the present apparatus, the resin, near the narrowed part of the hopper zone 6, is conveyed, squeezed to the side zones and remixed symmetrically and equally distributed on two web materials 4A, 4B, unlike what happens in known devices in which the resin is not pushed back and remixed symmetrically (Figure 10) but the liquid part below and nearer the lower web is privileged and dragged in the narrowed part in a more accentuated manner. In this case, the resin that rolls in accumulation remains in this zone for a much longer time than necessary (also two or four times longer than the appropriate time) and has time to react and create lumps that complicate the operation of the device and also compromise the quality of the finished panel.

The liquid, polyurethane or phenol reactive mixture deposited in the V-shaped hopper zone 6 is then dragged and spread to the sides by the supplying motion of the two belt devices 9A and 9B and the gravity between the slit 7 or calibrated meatus opening, the thickness of which is adjustable, to form a homogenous layer both transversely and longitudinally. In this manner, the layer of mixture, which is integral with the two web materials 4A and 4B, although it reacts progressively, is not able to block the slit 7, as the layer of mixture is continuously removed and conveyed downwards by the sliding webs 4A and 4B whilst the quantity of mixture removed from the hopper zone 6 is progressively replaced by a further mixture that flows from the mixing and dispensing heads.

As is evident from what has been disclosed and shown, unlike certain prior art systems (bar systems with slit-meatus), the reactive mixture in the apparatus 1 according to the invention is thus never in contact with fixed parts thereof but comes into contact only with the web materials 4A, 4B that are made of paper or plastics or the like that continuously drag the reactive mixture to the horizontal parallel final polymerisation webs. This achieves distribution that is homogeneous and without air bubbles of the polyurethane or phenol material and prevents the occurrence of undesired localised stagnation or solidification phenomena with consequent occurrence of irregularities in the distribution of the mixture.

Further, owing to the apparatus 1 so configured, in particular owing to the system with hopper zone 6 for the vertical flow of the reactive mixture, and owing to the dragging surfaces that renew themselves (consisting of the webs 4A and 4B of paper, plastics or other flexible material), and to the effect of squeezing to the sides, there is achieved, with respect to the systems with dispensing conduits or bars, a more homogenous and uniform distribution of the mixture that is above all free of the risk of possible inclusion of air bubbles. This configuration prevents the polyurethane mixture, during the initial expansion step, from generating corrugated surfaces or expanding unevenly inside the two webs of paper.

The two web materials 4A and 4B, after passing the station S_{E}, first follow the vertical or very tilted portion T_{V} of foaming path.

Owing to the presence of the guiding and resting means (9A, 10, 9B, 14; 12, 18), the correct position and lie of the webs 4A, 4B along the portion T_{V} is kept under control.

The two web materials 4A, 4B are kept closed along the respective coupled edges by the belts with guided C-section belts that maintain the pairs of edges pressed together along the vertical portion T_{V} and the curved portion Tc.

The two web materials 4A, 4B follow the curved portion Tc of the path, which can also be slightly divergent owing to the reciprocal position variation of the two coupled curve elements along which, advantageously, they continue to receive the guiding and resting action of the belt devices 9A and 9B or of the stationary element 12 and of the drum element 18.

Subsequently, the web materials 4A, 4B reach the transition portion Tt of the path, interacting respectively with the first resting and guiding plane P₁, arranged horizontally or slightly tilted, and with the second tilted resting and guiding plane P₂. In this transition portion Tt of the path, the first 4A and second 4B web material advance in a mutually divergent manner, and the distance of the one from the other increases progressively until the final thickness required for the panel 2 is reached.

Lastly, the web materials 4A and 4B between which the expanding foam is interposed, reach between the two parallel belt conveying devices 8A, 8B with which they travel along the final portion Tf of horizontal path.

Along the final straight horizontal portion Tf of path the joint edges of the webs of paper 4A and 4B are freed and the two edges of the lower web 4A of paper, which have a greater width than the upper web of paper, are turned up to form the vertical edges of the panel.

Along the final portion Tf of horizontal path the reaction is completed and the shape of the foam is stabilised.

From what has been disclosed above and shown in the drawings it is clear that the method and the apparatus 1 according to the invention enable panels 2 to be foamed that are distinguished by the high quality of the intermediate foam layer, which is free of air bubbles and vacuoles.

What has been said and shown in the attached drawings has been provided by way of illustration of the innovative features of the foaming apparatus according to several possible embodiments.

Modifications can be made to the apparatus or to parts thereof without thereby falling outside the scope of the claims.

In practice, the materials, inasmuch as they are compatible with the specific use and with the respective single components for which they are intended, can be chosen to suit the requested requirements and according to the available prior art.

It is possible to configure and size the apparatus 1 and adopt materials according to need and variants on and/or additions to what has been disclosed above and illustrated in the attached drawings are possible.

## Claims

1. Method for continuous foaming of a panel (2) of the type comprising outer layers (3A, 3B) of web material between which an intermediate layer (5) of insulating foam is interposed, comprising the steps of:
- supplying a first web material (4A) and a second web material (4B), which are precursors of said outer layers (3A, 3B), according to respective mutually converging directions (D1, D2) to a dispensing station (S_{E}) for dispensing liquid reactive mixture having a density (ρl) intended for generating said intermediate layer (5) of insulating foam, wherein in said liquid reactive mixture a desired percentage quantity in volume (η) of air or of liquefied pressurised gas is emulsified;
- maintaining, by guiding and resting means (9A, 10, 9B, 14; 12, 18; 18'), said first (4A) and second (4B) web materials continuously advancing and oriented according to planes that tilt mutually and converge downwards so as to bound a V-shaped hopper zone (6), placed below said station (S_{E}) for dispensing reactive mixture;
- moving, by said guiding and resting means (9A, 10, 9B, 14; 12, 18; 18'), said first (4A) and second (4B) web materials progressively closer to one another so as to define, in a bottom region of said hopper zone (6), a calibrated slit (7) for dragging said reactive mixture in the sliding direction with simultaneous squashing and distribution of said reactive mixture to opposite sides of the dispensing zone;
- dispensing said reactive mixture so as to fill at least partially said hopper zone (6) to wet simultaneously and symmetrically to a median plane of said hopper zone (6) the mutually facing zones of said first (4A) and second (4B) web materials advancing progressively downwards;
- advancing continuously and synchronously said first (4A) and second (4B) web materials downstream of said hopper zone (6) along a portion (T_{V}) that is vertical or anyway has a tilt of +/- 25 degrees with respect to a vertical plane, of a foaming path so as to drag said reactive mixture progressively downwards;
- supplying, along said vertical portion a continuous guiding and resting action to said first (4A) and second (4B) web materials so as to advance the first (4A) and second (4B) web materials substantially parallel to one another and spaced apart from one another at a controlled distance;
- diverting, downstream of said first vertical or very tilted portion (T_{V}), said first (4A) and second (4B) web materials along a successive curved portion (Tc) of said foaming path until a horizontal or slightly tilted lying plane is reached, in which along said curved portion (Tc) a guiding and resting action is provided below said first web material (4A);
- clamping, by a pressure action of elastic seal means (40) made of rubber or soft elastomer, each longitudinal edge (41) of said second web material (4B) against the respective longitudinal edge (42) of said first web material (4A) for containing laterally said reactive mixture, said elastic seal means (40) being mounted peripherally on part of said guiding and resting means (9A, 10, 9B, 14; 12, 18; 18');
- guiding, downstream of said curved portion (Tc), said first web material (4A) along a first resting and guiding plane (P₁), arranged horizontally or anyway having a tilt of +/- 25 degrees with respect to a horizontal plane, and said second web material (4B) along a second resting and guiding plane (P₂), tilted with respect to said first resting and guiding plane (P₁), such that said first (4A) and second (4B) web materials advance in a mutually divergent manner at a growing distance from one another along a transition portion (Tt) of said foaming path along which a guided expansion of said reactive mixture develops;
- conveying, and supplying a resting action to, said first (4A) and second (4B) web materials, with the interposed expanding foam, by means of two parallel belt conveying devices (8A, 8B) along a final portion (Tf), substantially horizontal, of a path to enable the foam reaction to be completed and the shape of the foam to be stabilised;
- mutually adjusting in position said guiding and resting means (9A, 10, 9B, 14; 12, 18; 18') for setting, at said calibrated slit (7), a distance (h) between the inner surfaces of said first (4A) and second (4B) web materials, according to a desired thickness (H) and a final density (pp) of said intermediate layer (5) of insulating foam that it is desired to obtain, said distance (h) at the calibrated slit (7) having a dimension ranging from 0.8 mm to 16 mm corresponding to a final thickness (H) of the panel equal to 30 mm and to 250 mm respectively.

2. Method according to claim 1, wherein said distance (h) is determined by the following relation: 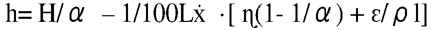 where:
L [m] is the width of said panel (2);
ẋ is the advancement speed of the web materials, liquid,
expanding resin, conveying devices and finished panel;
*α* [m3/ m3] is the indicative parameter of the free volumetric expansion of the foam;
ε [Kg/sec] is the mass percentage of "overpacking".

3. Method according to claim 1 or 2, wherein there is provided supplying a resting action to, and guiding said first web material (4A) by means of a movable belt device (9A) which is wound to rotating driving means (10), the edges of said movable belt device (9A) engaging slidingly with guiding elements (11) which are so shaped as to impress on said movable belt device (9A) a rectilinear profile at said vertical or very tilted portion (T_{V}), and a curved profile at said curved portion (Tc) that is suitable for diverting the web to a direction that is horizontal or slightly tilted, and wherein air is sucked to maintain said first web material (4A) adhering via a vacuum to said movable belt device (9A) during advancement.

4. Method according to claim 1 or 2, wherein there is provided supplying a resting action to, and guiding said first web material (4A) by means of a stationary resting and guiding element (12) having a partially flat and partially concave guiding and resting surface (13) on which said first web material (4A) slides.

5. Method according to claim 4, wherein air is sucked to create a vacuum to be transmitted through openings obtained on said guiding and resting surface (13) to maintain said first web material (4A) adhering, during sliding, to said stationary resting and guiding element (12).

6. Method according to any preceding claim, wherein there is provided supplying a resting action to, and guiding said second web material (4B) by means of a further movable belt device (9B) that is wound to respective rotating driving means (14) placed at opposite ends.

7. Method according to claim 6, wherein said further movable belt device (9B) slides on a stationary contrasting element (15) having a flat surface portion (16), at said vertical or very tilted portion (T_{V}), and a convex surface portion (17), at said curved portion (Tc).

8. Method according to any one of claims 1 to 5, wherein there is provided supplying a resting action to, and guiding said second web material (4B) by means of a roller element (18; 18') or rotatable drum element of dimensions that are such as to extend substantially from said hopper zone (6) to near said transition portion (Tt).

9. Method according to any preceding claim, wherein the edges of said first web material (4A) are folded upwards and/or the edges of said second web material (4B) are folded downwards and are mutually pressed for containing laterally the expanding reactive mixture.

10. Apparatus for continuous foaming of a panel (2) comprising:
- a station (S_{E}) for dispensing liquid reactive mixture with a density (pl),intended for generating an intermediate layer (5) of insulating foam of said panel (2), in said liquid reactive mixture a desired percentage quantity in volume (η) of air or of liquefied pressurised gas being emulsifiable;
- supplying and guiding means (19) for supplying to said station (S_{E}), according to respective mutually converging directions (D1, D2), a first web material (4A) and a second web material (4B), which are precursors of outer layers (3A, 3B) of said panel (2);
- guiding and resting means (9A, 10, 9B, 14; 12, 18; 18') configured for arranging and maintaining said first (4A) and second (4B) web materials, near said station (S_{E}), according to planes converging downwards so as to bound a V-shaped hopper zone (6) converging downwards, placed below said station (S_{E}) for dispensing reactive mixture;
- said guiding and resting means (9A, 10, 9B, 14; 12, 18; 18') being configured for moving said first (4A) and second (4B) web materials progressively closer to one another so as to define, in a bottom region of said hopper zone (6), a calibrated slit (7) for dragging in the sliding direction and simultaneously crushing said reactive mixture to opposite lateral ends of said hopper zone (6);
- said guiding and resting means (9A, 10, 9B, 14; 12, 18; 18') being mutually adjustable in position for setting, at said calibrated slit (7), a distance (h) between the inner surfaces of said first (4A) and second (4B) web materials according to a desired thickness (H) and a final density (pp) of said intermediate layer (5) of insulating foam that it is desired to obtain;
- said dispensing station (S_{E}) comprising one or more mixing heads that are suitable for filling at least partially said hopper zone (6) with said reactive mixture for simultaneously wetting, symmetrically to a median plane of said hopper zone (6), said first (4A) and second (4B) web materials;
- said guiding and resting means (9A, 10, 9B, 14; 12, 18; 18') being further configured and adjustable for supplying a continuous guiding and resting action and advancing in synchrony said first (4A) and second (4B) web materials substantially parallel to one another at a controlled mutual distance first along a portion (T_{V}) which is vertical or anyway has a tilt angle of +/- 25 degrees with respect to a vertical plane, to drag progressively downwards said reactive mixture contained in said hopper zone (6), and subsequently along a curved portion (Tc) so as to divert said first (4A) and second (4B) web materials to an almost horizontal transition portion (Tt) of the path;
- a first resting and guiding plane (P₁), arranged horizontally suitable for guiding and slidably supporting said first web material (4A), and a second resting and guiding plane (P₂) suitable for supplying a resting action to and slidably guiding said second web material (4B), said second resting and guiding plane (P₂) being tilted with respect to said first resting and guiding plane (P₁) so as to advance said first (4A) and second (4B) web materials in a mutually divergent manner at a growing distance from one another along said transition portion (Tt) of the foaming path along which a guided expansion of said reactive mixture develops;
- elastic seal means (40), made of rubber or soft elastomer, mounted peripherally on part of said guiding and resting means (9A, 10, 9B, 14; 12, 18; 18') and configured for pressing each longitudinal edge (41) of said second web material (4B) against the respective longitudinal edge (42) of said first web material (4A) for containing laterally said reactive mixture;
- a pair of conveying devices (8A, 8B) that are spaced apart from one another and are parallel, that are suitable for conveying and supplying a resting action to said first (4A) and second (4B) web materials, with the interposed expanding foam, along a final portion (Tf) of a substantially horizontal path to enable the foam reaction to be completed and the shape of the foam to be stabilised.

11. Apparatus according to claim 10, wherein said guiding and resting means comprises a first belt device or linked slats device (9A), wound to driving rotating means (10) and movable at a speed that is synchronous with the foaming plant for guiding said first web material (4A), shaped guiding elements (11) being further provided that are suitable for engaging slidably with the edges of said movable belt device (9A), said guiding elements (11) having a rectilinear portion (22) to impress on said movable belt device (9A) a rectilinear profile at said vertical or very tilted portion (T_{V}), and a lower curved portion (23) to impress on said movable belt device (9A) a concave curved profile at said curved portion (Tc) and convey the curved portion (Tc) in a horizontal or slightly tilted direction.

12. Apparatus according to claim 11, further comprising suction openings obtained on said movable belt device (9A) and vacuum generating means (28) arranged for sucking air and transmitting the vacuum through said suction openings to maintain said first web material (4A) adhering to said movable belt device (9A) during advancement.

13. Apparatus according to claim 10, wherein said guiding and resting means comprises a stationary resting and guiding element (12) having a guiding and resting surface (13) having a substantially flat upper zone (20), for guiding said first web material (4A) along said vertical or very tilted portion (T_{V}), and a lower concave zone (21), for guiding said first web material (4A) along said curved portion (Tc).

14. Apparatus according to claim 13, wherein on said guiding and resting surface (13) openings are provided through which it is possible to transmit the vacuum by sucking air to maintain said first web material (4A) adhering, during sliding, to said stationary resting and guiding element (12).

15. Apparatus according to any one of claims 10 to 14, comprising a further movable belt device (9B), that is suitable for guiding said second web material (4B), said further movable belt device (9B) being wound to rotating means (14) located at respective opposite ends, and driven at the same synchronous driving speed.

16. Apparatus according to claim 15, further comprising a stationary contrasting element (15) suitable for restingly receiving, and giving a desired profile to, said further movable belt device (9B), said stationary contrasting element (15) including a flat surface portion (16), at said vertical or very tilted portion (T_{V}), and a convex surface portion (17), at said curved portion (Tc).

17. Apparatus according to any one of claims 10 to 14, comprising a roller element (18; 18') or a rotatable drum that is suitable for supplying a guiding and resting action to said second (4B) web material, said roller element (18; 18') or rotatable drum element having dimensions that are such as to extend substantially from said hopper zone (6) to near said transition portion (Tt).

18. Apparatus according to any one of claims 10 to 17 further comprising means for folding and mutually clamping the longitudinal edges of said first (4A) and second (4B) web materials along said final portion (Tf) of path for containing laterally the expanding reactive mixture.

19. Apparatus according to any one of claims 10 to 18, further comprising flexible seal means for pinching the edges of the web materials, and means for setting the reciprocal position of said guiding and resting means (9A, 10, 9B, 14; 12, 18; 18') to adjust said curved portion (Tc) so as to create an expansion zone also along the latter.

## Patentansprüche

1. Verfahren zum fortlaufenden Aufschäumen einer Platte (2) von der Art, die Außenschichten (3A, 3B) aus Bahnmaterial umfasst, zwischen denen eine Zwischenschicht (5) aus isolierendem Schaum angeordnet ist, umfassend die folgenden Schritte:
- Zuführen eines ersten Bahnmaterials (4A) und eines zweiten Bahnmaterials (4B), die Vorläufer der Außenschichten (3A, 3B) sind, gemäß jeweiligen zueinander konvergierenden Richtungen (D1, D2) an eine Abgabestation (S_{E}) zum Abgeben eines flüssigen reaktiven Gemischs mit einer für das Erzeugen der Zwischenschicht (5) aus isolierenden Schaum vorgesehenen Dichte (ρ1), wobei in dem flüssigen reaktiven Gemisch eine gewünschte Prozentmenge eines Volumens (η) von Luft oder eines verflüssigten, unter Druck stehenden Gases emulgiert ist;
- Beibehalten, durch Führungs- und Auflagemittel (9A, 10, 9B, 14; 12, 18; 18'), dass sich das erste (4A) und das zweite (4B) Bahnmaterial fortlaufend in Übereinstimmung mit Ebenen fortbewegen und ausgerichtet sind, die zueinander geneigt sind und nach unten konvergieren, um eine V-förmige Trichterzone (6) einzufassen, die unterhalb der Station (S_{E}) zum Abgeben des reaktiven Gemischs platziert ist;
- Bewegen, durch die Führungs- und Auflagemittel (9A, 10, 9B, 14; 12, 18; 18'), des ersten (4A) und des zweiten (4B) Bahnmaterials progressiv näher zueinander, um in einem Bodenbereich der Trichterzone (6) einen kalibrierten Schlitz (7) zu definieren, zum Ziehen des reaktiven Gemischs in der Gleitrichtung mit gleichzeitiger Quetschung und Verteilung des reaktiven Gemischs an gegenüberliegende Seiten der Abgabezone;
- Abgeben des reaktiven Gemischs, um die Trichterzone (6) zumindest teilweise zu befüllen, um gleichzeitig und symmetrisch zu einer Medianebene der Trichterzone (6) die einander zugewandten Zonen des ersten (4A) und des zweiten (4B) Bahnmaterials, die sich progressiv nach unten fortbewegen, zu benetzen;
- fortlaufendes und synchrones Fortbewegen des ersten (4A) und des zweiten (4B) Bahnmaterials stromabwärts der Trichterzone (6) entlang einem Abschnitt (T_{V}), der vertikal ist oder jedenfalls eine Neigung von +/- 25 Grad in Bezug auf eine vertikale Ebene aufweist, eines Aufschäumungswegs, um das reaktive Gemisch progressiv nach unten zu ziehen;
- Bereitstellen, entlang dem vertikalen Abschnitt, einer fortlaufenden Führungs- und Auflagewirkung für das erste (4A) und das zweite (4B) Bahnmaterial, um das erste (4A) und das zweite (4B) Bahnmaterial im Wesentlichen parallel zueinander und in einem geregelten Abstand voneinander beabstandet fortzubewegen;
- Ablenken, stromabwärts des vertikalen oder stark geneigten Abschnitts (T_{V}), des ersten (4A) und den zweiten (4B) Bahnmaterials entlang einem nachfolgenden gekrümmten Abschnitt (Tc) des Aufschäumungswegs, bis eine horizontale oder leicht geneigt liegende Ebene erreicht ist, in der entlang dem gekrümmten Abschnitt (Tc) eine Führungs- und Auflagewirkung unterhalb des ersten Bahnmaterials (4A) bereitgestellt wird;
- Klemmen, durch eine Druckwirkung von elastischen Dichtungsmitteln (40) aus Gummi oder einem weichen Elastomer, jeder Längskante (41) des zweiten Bahnmaterials (4B) gegen die jeweilige Längskante (42) des ersten Bahnmaterials (4A), um das reaktive Gemisch seitlich einzusperren, wobei die elastischen Dichtungsmittel (40) peripher an einem Teil der Führungs- und Auflagemittel (9A, 10, 9B, 14; 12, 18; 18') befestigt sind;
- Führen, stromabwärts des gekrümmten Abschnitts (Tc), des ersten Bahnmaterials (4A) entlang einer ersten Auflage- und Führungsebene (P₁), die horizontal angeordnet ist oder jedenfalls eine Neigung von +/- 25 Grad in Bezug auf eine horizontale Ebene hat, und des zweiten Bahnmaterials (4B) entlang einer zweiten Auflage- und Führungsebene (P₂), die in Bezug auf die erste Auflage- und Führungsebene (P₁) geneigt ist, sodass sich das erste (4A) und das zweite (4B) Bahnmaterial in einer voneinander divergierenden Weise in einem wachsenden Abstand voneinander entlang einem Übergangsabschnitt (Tt) des Aufschäumungs-wegs fortbewegen, entlang dem sich eine geführte Ausdehnung des reaktiven Gemischs entwickelt;
- Befördern des ersten (4A) und des zweiten (4B) Bahnmaterials mit dem dazwischen angeordneten, sich ausdehnenden Schaum, und Bereitstellen einer Auflagewirkung dafür, mittels zweier paralleler Gurtfördervorrichtungen (8A, 8B) entlang einem Endabschnitt (Tf), im Wesentlichen horizontal, eines Wegs, um es zu ermöglichen, dass die Schaumreaktion abgeschlossen und die Gestalt des Schaums stabilisiert wird;
- wechselseitiges Einstellen der Position der Führungs- und Auflagemittel (9A, 10, 9B, 14; 12, 18; 18') zum Festlegen, an dem kalibrierten Schlitz (7), eines Abstands (h) zwischen den Innenflächen des ersten (4A) und des zweiten (4B) Bahnmaterials gemäß einer gewünschten Dicke (H) und einer Enddichte (pp) der Zwischenschicht (5) aus isolierendem Schaum, deren Erhalten gewünscht ist, wobei der Abstand (h) an dem kalibrierten Schlitz (7) eine Abmessung im Bereich von 0,8 mm bis 16 mm aufweist, entsprechend einer Enddicke (H) der Platte von gleich 30 mm bzw. 250 mm.

2. Verfahren nach Anspruch 1, wobei der Abstand (h) durch die folgende Beziehung bestimmt ist: 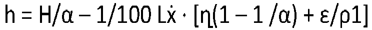 wobei:
L [m] die Breite der Platte (2) ist;
x die Fortbewegungsgeschwindigkeit der Bahnmaterialien, der Flüssigkeit, des sich ausdehnenden Harzes, der Fördervorrichtungen und der fertigen Platte ist;
α [m3/m3] der Anzeigeparameter der freien volumetrischen Ausdehnung des Schaums ist;
ε [kg/sec] der Massenprozentsatz der "Überfüllung" ist.

3. Verfahren nach Anspruch 1 oder 2, wobei das Bereitstellen einer Auflagewirkung und das Führen des ersten Bahnmaterials (4A) mittels einer beweglichen Gurtvorrichtung (9A) bereitgestellt ist, die auf drehende Antriebsmittel (10) aufgewickelt ist, wobei die Kanten der beweglichen Gurtvorrichtung (9A) gleitend mit Führungselementen (11) in Eingriff gehen, die derart geformt sind, dass sie auf der beweglichen Gurtvorrichtung (9A) ein geradliniges Profil im vertikalen oder stark geneigten Abschnitt (T_{V}) und ein gekrümmtes Profil im gekrümmten Abschnitt (Tc) aufbringen, das zum Ablenken der Bahn in eine horizontal oder leicht geneigte Richtung geeignet ist, und wobei Luft abgesaugt wird, um beizubehalten, dass das erste Bahnmaterial (4A) während der Fortbewegung über ein Vakuum an der beweglichen Gurtvorrichtung (9A) haften bleibt.

4. Verfahren nach Anspruch 1 oder 2, wobei das Bereitstellen einer Auflagewirkung und das Führen des ersten Bahnmaterials (4A) mittels eines ortsfesten Auflage- und Führungselements (12) bereitgestellt ist, das eine teilweise flache und teilweise konkave Führungs- und Auflagefläche (13) aufweist, auf der das erste Bahnmaterial (4A) gleitet.

5. Verfahren nach Anspruch 4, wobei Luft abgesaugt wird, um ein Vakuum zu erzeugen, das durch in der Führungs- und Auflagefläche (13) gebildete Öffnungen übertragen werden soll, um beizubehalten, dass das erste Bahnmaterial (4A) während des Gleitens an dem ortsfesten Auflage- und Führungselement (12) haften bleibt.

6. Verfahren nach einem vorstehenden Anspruch, wobei das Bereitstellen einer Auflagewirkung und das Führen des zweiten Bahnmaterials (4B) mittels einer weiteren beweglichen Gurtvorrichtung (9B) bereitgestellt ist, die auf ent-sprechende drehende Antriebsmittel (14) aufgewickelt ist, die an entgegen-gesetzten Enden platziert sind.

7. Verfahren nach Anspruch 6, wobei die weitere bewegliche Gurtvorrichtung (9B) auf einem ortsfesten kontrastierenden Element (15) gleitet, das einen flachen Flächenabschnitt (16) im vertikalen oder stark geneigten Abschnitt (T_{V}) und einen konvexen Flächenabschnitt (17) im gekrümmten Abschnitt (Tc) aufweist.

8. Verfahren nach einem der Ansprüche 1 bis 5, wobei das Bereitstellen einer Auflagewirkung und das Führen des zweiten Bahnmaterials (4B) mittels eines Walzenelements (18; 18') oder eines drehbaren Trommelelements mit solchen Abmessungen bereitgestellt ist, dass es sich im Wesentlichen von der Trichterzone (6) bis in die Nähe des Übergangsabschnitts (Tt) erstreckt.

9. Verfahren nach einem vorstehenden Anspruch, wobei die Kanten des ersten Bahnmaterials (4A) nach oben gefaltet werden und/oder die Kanten des zweiten Bahnmaterials (4B) nach unten gefaltet werden und diese aneinander gepresst werden, um das sich ausdehnende reaktive Gemisch seitlich einzusperren.

10. Vorrichtung zum fortlaufenden Aufschäumen einer Platte (2), umfassend:
- eine Station (S_{E}) zum Abgeben eines flüssigen reaktiven Gemischs mit einer für das Erzeugen einer Zwischenschicht (5) aus isolierenden Schaum der Platte (2) vorgesehenen Dichte (p1), wobei in dem flüssigen reaktiven Gemisch eine gewünschte Prozentmenge eines Volumens (η) von Luft oder eines verflüssigten, unter Druck stehenden Gases emulgierbar ist;
- Zufuhr- und Führungsmittel (19) zum Zuführen eines ersten Bahnmaterials (4A) und eines zweiten Bahnmaterials (4B), die Vorläufer der Außenschichten (3A, 3B) der Platte (2) sind, gemäß jeweiligen zueinander konvergierenden Richtungen (D1, D2) an die Station (S_{E});
- Führungs- und Auflagemittel (9A, 10, 9B, 14; 12, 18; 18'), konfiguriert zum Anordnen und Beibehalten des ersten (4A) und des zweiten (4B) Bahnmaterials in der Nähe der Station (S_{E}) in Übereinstimmung mit Ebenen, die nach unten konvergieren, um eine nach unten konvergierende V-förmige Trichterzone (6) einzufassen, die unterhalb der Station (S_{E}) zum Abgeben des reaktiven Gemischs platziert ist;
- wobei die Führungs- und Auflagemittel (9A, 10, 9B, 14; 12, 18; 18') dafür konfiguriert sind, das erste (4A) und das zweite (4B) Bahnmaterial progressiv näher zueinander zu bewegen, um in einem Bodenbereich der Trichterzone (6) einen kalibrierten Schlitz (7) zu definieren, zum Ziehen in der Gleitrichtung und gleichzeitigem Zerkleinern des reaktiven Gemischs an gegenüberliegende seitliche Enden der Trichterzone (6);
- wobei die Position der Führungs- und Auflagemittel (9A, 10, 9B, 14; 12, 18; 18') wechselseitig einstellbar ist, zum Festlegen, an dem kalibrierten Schlitz (7), eines Abstands (h) zwischen den Innenflächen des ersten (4A) und des zweiten (4B) Bahnmaterials gemäß einer gewünschten Dicke (H) und einer Enddichte (pp) der Zwischenschicht (5) aus isolierendem Schaum, deren Erhalten gewünscht ist;
- wobei die Abgabestation (S_{E}) einen oder mehrere Mischköpfe umfasst, die dafür geeignet sind, die Trichterzone (6) zumindest teilweise mit dem reaktiven Gemisch zu befüllen, um gleichzeitig symmetrisch zu einer Medianebene der Trichterzone (6) das erste (4A) und das zweite (4B) Bahnmaterial zu benetzen;
- wobei die Führungs- und Auflagemittel (9A, 10, 9B, 14; 12, 18; 18') weiter dafür konfiguriert und einstellbar sind, eine fortlaufende Führungs- und Auflagewirkung bereitzustellen und synchron das erste (4A) und das zweite (4B) Bahnmaterial im Wesentlichen parallel zueinander in einem geregelten Abstand voneinander fortzubewegen, zuerst entlang einem Abschnitt (T_{V}), der vertikal ist oder jedenfalls einen Neigungswinkel von +/- 25 Grad in Bezug auf eine vertikale Ebene aufweist, um das reaktive Gemisch, das in der Trichterzone (6) enthalten ist, progressiv nach unten zu ziehen, und anschließend entlang einem gekrümmten Abschnitt (Tc), um das erste (4A) und das zweite (4B) Bahnmaterial in einen beinahe horizontalen Übergangsabschnitt (Tt) des Wegs abzulenken;
- eine erste Auflage- und Führungsebene (P₁), horizontal angeordnet und geeignet zum Führen und gleitbaren Stützen des ersten Bahnmaterials (4A), und eine zweite Auflage- und Führungsebene (P₂), geeignet zum Bereitstellen einer Auflagewirkung und gleitbaren Führen des zweiten Bahnmaterials (4B), wobei die zweite Auflage- und Führungsebene (P₂) in Bezug auf die erste Auflage- und Führungsebene (P₁) geneigt ist, sodass sich das erste (4A) und das zweite (4B) Bahnmaterial in einer voneinander divergierenden Weise in einem wachsenden Abstand voneinander entlang dem Übergangsabschnitt (Tt) des Aufschäumungs-wegs fortbewegen, entlang dem sich eine geführte Ausdehnung des reaktiven Gemischs entwickelt;
- elastische Dichtungsmittel (40) aus Gummi oder einem weichen Elastomer, peripher an einem Teil der Führungs- und Auflagemittel (9A, 10, 9B, 14; 12, 18; 18') befestigt und konfiguriert zum Pressen jeder Längskante (41) des zweiten Bahnmaterials (4B) gegen die jeweilige Längskante (42) des ersten Bahnmaterials (4A), um das reaktive Gemisch seitlich einzusperren;
- ein Paar Fördervorrichtungen (8A, 8B), die voneinander beabstandet und parallel sind, die dafür geeignet sind, das erste (4A) und das zweite (4B) Bahnmaterial mit dem dazwischen angeordneten, sich ausdehnenden Schaum, zu befördern und eine Auflagewirkung dafür bereitzustellen, entlang einem Endabschnitt (Tf) eines im Wesentlichen horizontalen Wegs, um es zu ermöglichen, dass die Schaumreaktion abgeschlossen und die Gestalt des Schaums stabilisiert wird.

11. Verfahren nach Anspruch 10, wobei die Führungs- und Auflagemittel eine erste Gurtvorrichtung oder Vorrichtung mit verbundenen Lamellen (9A) umfassen, die auf Antriebsdrehmittel (10) aufgewickelt und mit einer Geschwindigkeit bewegbar ist, die mit der Aufschäumungsanlage synchron ist, um das erste Bahnmaterial (4A) zu führen, wobei weiter geformte Führungselemente (11) bereitgestellt sind, die dafür geeignet sind, gleitbar mit den Kanten der beweglichen Gurtvorrichtung (9A) in Eingriff zu gehen, wobei die Führungselemente (11) einen geradlinigen Abschnitt (22) aufweisen, um auf der beweglichen Gurtvorrichtung (9A) ein geradliniges Profil im vertikalen oder stark geneigten Abschnitt (T_{V}) aufzubringen, und einen unteren gekrümmten Abschnitt (23), um auf der beweglichen Gurtvorrichtung (9A) ein konkaves gekrümmtes Profil im gekrümmten Abschnitt (Tc) aufzubringen und den gekrümmten Abschnitt (Tc) in einer horizontalen oder leicht geneigten Richtung zu befördern.

12. Vorrichtung nach Anspruch 11, weiter umfassend Saugöffnungen, die in der beweglichen Gurtvorrichtung (9A) gebildet sind, und Vakuumerzeugungsmittel (28), angeordnet zum Absaugen von Luft und Übertragen des Vakuums durch die Saugöffnungen, um beizubehalten, dass das erste Bahnmaterial (4A) während der Fortbewegung an der beweglichen Gurtvorrichtung (9A) haften bleibt.

13. Vorrichtung nach Anspruch 10, wobei die Führungs- und Auflagemittel ein ortsfestes Auflage- und Führungselement (12) umfassen, das eine Führungs- und Auflagefläche (13) aufweist, mit einer im Wesentlichen flachen oberen Zone (20) zum Führen des ersten Bahnmaterials (4A) entlang dem vertikalen oder stark geneigten Abschnitt (T_{V}) und einer unteren konkaven Zone (21) zum Führen des ersten Bahnmaterials (4A) entlang dem gekrümmten Abschnitt (Tc).

14. Vorrichtung nach Anspruch 13, wobei in der Führungs- und Auflagefläche (13) Öffnungen bereitgestellt sind, durch die das Vakuum mittels Absaugen von Luft übertragen werden kann, um beizubehalten, dass das erste Bahnmaterial (4A) während des Gleitens an dem ortsfesten Auflage- und Führungselement (12) haften bleibt.

15. Vorrichtung nach einem der Ansprüche 10 bis 14, umfassend eine weitere bewegliche Gurtvorrichtung (9B), die zum Führen des zweiten Bahnmaterials (4B) geeignet ist, wobei die weitere bewegliche Gurtvorrichtung (9B) auf Drehmittel (14) aufgewickelt ist, die an jeweiligen entgegengesetzten Enden angeordnet sind und mit der gleichen synchronen Antriebsgeschwindigkeit angetrieben werden.

16. Vorrichtung nach Anspruch 15, weiter umfassend ein ortsfestes kontrastierendes Element (15), das dafür geeignet ist, die weitere bewegliche Gurtvorrichtung (9B) aufliegend aufzunehmen und ihr ein gewünschtes Profil zu geben, wobei das ortsfeste kontrastierende Element (15) einen flachen Flächenabschnitt (16) im vertikalen oder stark geneigten Abschnitt (T_{V}) und einen konvexen Flächenabschnitt (17) im gekrümmten Abschnitt (Tc) aufweist.

17. Verfahren nach einem der Ansprüche 10 bis 14, umfassend ein Walzenelement (18; 18') oder eine drehbare Trommel, das/die dafür geeignet ist, eine Führungs- und Auflagewirkung für das zweite (4B) Bahnmaterial bereitzustellen, wobei das Walzenelement (18; 18') oder drehbare Trommelelement solche Abmessungen hat, dass es sich im Wesentlichen von der Trichterzone (6) bis in die Nähe des Übergangsabschnitts (Tt) erstreckt.

18. Verfahren nach einem der Ansprüche 10 bis 17, weiter umfassend Mittel zum Falten und wechselseitigen Klemmen der Längskanten des ersten (4A) und des zweiten (4B) Bahnmaterials entlang dem Endabschnitt (Tf) des Wegs, um das sich ausdehnende reaktive Gemisch seitlich einzusperren.

19. Verfahren nach einem der Ansprüche 10 bis 18, weiter umfassend flexible Dichtungsmittel zum Abklemmen der Kanten der Bahnmaterialien, und Mittel zum Einstellen der beiderseitigen Position der Führungs- und Auflagemittel (9A, 10, 9B, 14; 12, 18; 18') zum Anpassen des gekrümmten Abschnitts (Tc), um ebenfalls entlang dem Letztgenannten eine Ausdehnungszone zu bilden.

## Revendications

1. Procédé de moussage continu d'un panneau (2) du type comprenant des couches extérieures (3A, 3B) d'un matériau en bande entre lesquelles une couche intermédiaire (5) de mousse isolante est interposée, comprenant les étapes de :
- la fourniture d'un premier matériau en bande (4A) et d'un second matériau en bande (4B), qui sont des précurseurs desdites couches extérieures (3A, 3B), selon des directions mutuellement convergentes respectives (D1, D2) vers une station de distribution (S_{E}) pour distribuer un mélange réactif liquide, ayant une densité (pl), destiné à la génération de ladite couche intermédiaire (5) de mousse isolante, dans lequel, dans ledit mélange réactif liquide, une quantité de pourcentage souhaitée en volume (η) d'air ou d'un gaz pressurisé liquéfié est émulsifiée ;
- le maintien, par des moyens de guidage et d'appui (9A, 10, 9B, 14 ; 12, 18 ; 18'), desdits premier (4A) et second (4B) matériaux en bande avançant continuellement et orientés selon des plans qui s'inclinent mutuellement et convergent vers le bas de manière à délimiter une zone de trémie en forme de V (6), placée au-dessous de ladite station (S_{E}) pour la distribution de mélange réactif ;
- le déplacement, par lesdits moyens de guidage et d'appui (9A, 10, 9B, 14 ; 12, 18 ; 18'), desdits premier (4A) et second (4B) matériaux en bande pour les rapprocher progressivement l'un de l'autre de manière à définir, dans une région de fond de ladite zone de trémie (6), une fente étalonnée (7) pour faire glisser ledit mélange réactif dans la direction de glissement avec l'écrasement et la répartition simultanés dudit mélange réactif sur des côtés opposés de la zone de distribution ;
- la distribution dudit mélange réactif de manière à remplir au moins partiellement ladite zone de trémie (6) pour humidifier simultanément et symétriquement par rapport à un plan médian de ladite zone de trémie (6) les zones se faisant face mutuellement desdits premier (4A) et second (4B) matériaux en bande avançant progressivement vers le bas ;
- l'avancement continuel et synchrone desdits premier (4A) et second (4B) matériaux en bande en aval de ladite zone de trémie (6) le long d'une portion (T_{V}) qui est verticale ou qui a une inclinaison de +/- 25 degrés par rapport à un plan vertical, d'un chemin de moussage de manière à faire glisser ledit mélange réactif progressivement vers le bas ;
- la fourniture, le long de ladite portion verticale, d'une action de guidage et d'appui continue auxdits premier (4A) et second (4B) matériaux en bande de manière à faire avancer lesdits premier (4A) et second (4B) matériaux en bande sensiblement parallèlement l'un à l'autre et espacés l'un de l'autre à une distance régulée ;
- le détournement, en aval de ladite première portion verticale ou très inclinée (T_{V}), desdits premier (4A) et second (4B) matériaux en bande le long d'une portion incurvée successive (Tc) dudit chemin de moussage jusqu'à ce qu'un plan de couchage horizontal ou légèrement incliné soit atteint, dans lequel, le long de ladite portion incurvée (Tc), une action de guidage et d'appui est fournie au-dessous dudit premier matériau en bande (4A) ;
- le serrage, par une action de pression d'un moyen de scellement élastique (40) constitué de caoutchouc ou d'élastomère souple, de chaque bord longitudinal (41) dudit second (4B) matériau en bande contre le bord longitudinal respectif (42) dudit premier matériau en bande (4A) pour contenir latéralement ledit mélange réactif, ledit moyen de scellement élastique (40) étant monté de manière périphérique sur une partie desdits moyens de guidage et d'appui (9A, 10, 9B, 14 ; 12, 18 ; 18') ;
- le guidage, en aval de ladite portion incurvée (Tc), dudit premier matériau en bande (4A) le long d'un premier plan d'appui et de guidage (P₁), agencé horizontalement ou ayant une inclinaison de +/- 25 degrés par rapport à un plan horizontal, et dudit second matériau en bande (4B) le long d'un second plan d'appui et de guidage (P₂), incliné par rapport audit premier plan d'appui et de guidage (P₁), de sorte que lesdits premier (4A) et second (4B) matériaux en bande avancent d'une manière mutuellement divergente à une distance croissante l'un de l'autre le long d'une portion de transition (Tt) dudit chemin de moussage le long de laquelle une expansion guidée dudit mélange réactif se développe ;
- le transport desdits, et la fourniture d'une action d'appui auxdits, premier (4A) et second (4B) matériaux en bande, avec la mousse en expansion interposée, au moyen de deux dispositifs de transport à courroie parallèles (8A, 8B) le long d'une portion finale (Tf), sensiblement horizontale, d'un chemin pour permettre l'accomplissement de la réaction de mousse et la stabilisation de la forme de la mousse ;
- l'ajustement mutuel en position desdits moyens de guidage et d'appui (9A, 10, 9B, 14 ; 12, 18 ; 18') pour le réglage, à ladite fente étalonnée (7), d'une distance (h) entre les surfaces intérieures desdits premier (4A) et second (4B) matériaux en bande, selon une épaisseur souhaitée (H) et une densité finale (pp) de ladite couche intermédiaire (5) de mousse isolante qu'il est souhaité obtenir, ladite distance (h) à la fente étalonnée (7) ayant une dimension dans une plage de 0,8 mm à 16 mm correspondant à une épaisseur finale (H) du panneau égale respectivement à 30 mm et à 250 mm.

2. Procédé selon la revendication 1, dans lequel ladite distance (h) est déterminée par la relation suivante : $h = H / α - 1 / 100 L \dot{x} . \left[η\left(1-1/α\right)+ε/ρ1\right]$ où
L[m] est la largeur dudit panneau (2) ;
*ẋ* est la vitesse d'avancement des matériaux en bande, du liquide, de la résine en expansion, des dispositifs de transport et du panneau fini ;
α [m3/m3] est le paramètre indicatif de l'expansion volumétrique libre de la mousse ;
ε [Kg/sec] est le pourcentage en masse de « suremballage ».

3. Procédé selon la revendication 1 ou 2, dans lequel il est prévu la fourniture d'une action d'appui audit, et le guidage dudit, premier matériau en bande (4A) au moyen d'un dispositif à courroie mobile (9A) qui est enroulé sur des moyens d'entraînement rotatifs (10), les bords dudit dispositif à courroie mobile (9A) se mettant en prise en coulissant avec des éléments de guidage (11) qui sont formés de manière à imprimer audit dispositif à courroie mobile (9A) un profil rectiligne à ladite portion verticale ou très inclinée (T_{V}), et un profil incurvé à ladite portion incurvée (Tc) qui est approprié pour détourner la bande dans une direction qui est horizontale ou légèrement inclinée, et dans lequel de l'air est aspiré pour maintenir ledit premier matériau en bande (4A) en adhérence sous vide audit dispositif à courroie mobile (9A) pendant un avancement.

4. Procédé selon la revendication 1 ou 2, dans lequel il est prévu la fourniture d'une action d'appui audit, et le guidage dudit, premier matériau en bande (4A) au moyen d'un élément d'appui et de guidage immobile (12) ayant une surface de guidage et d'appui partiellement plate et partiellement concave (13) sur laquelle ledit premier matériau en bande (4A) coulisse.

5. Procédé selon la revendication 4, dans lequel de l'air est aspiré pour créer un vide à transmettre à travers des ouvertures obtenues sur ladite surface de guidage et d'appui (13) pour maintenir ledit premier matériau en bande (4A) en adhérence, au cours du coulissement, sur ledit élément d'appui et de guidage immobile (12).

6. Procédé selon l'une quelconque des revendications précédentes, dans lequel il est prévu la fourniture d'une action d'appui audit, et le guidage dudit, second matériau en bande (4B) au moyen d'un autre dispositif à courroie mobile (9B) qui est enroulé sur des moyens d'entraînement rotatifs respectifs (14) placés à des extrémités opposées.

7. Procédé selon la revendication 6, dans lequel ledit autre dispositif à courroie mobile (9B) coulisse sur un élément de contraste immobile (15) ayant une portion de surface plate (16), à ladite portion verticale ou très inclinée (T_{V}), et une portion de surface convexe (17), à ladite portion incurvée (Tc).

8. Procédé selon l'une quelconque des revendications 1 à 5, dans lequel il est prévu la fourniture d'une action d'appui audit, et le guidage dudit, second matériau en bande (4B) au moyen d'un élément de rouleau (18; 18') ou d'un élément de tambour rotatif de dimensions telles qu'il s'étend sensiblement de ladite zone de trémie (6) jusqu'à proximité de ladite portion de transition (Tt).

9. Procédé selon l'une quelconque des revendications précédentes, dans lequel les bords dudit premier matériau en bande (4A) sont repliés vers le haut et/ou les bords dudit second matériau en bande (4B) sont repliés vers le bas et sont mutuellement pressés pour contenir latéralement le mélange réactif en expansion.

10. Appareil de moussage continu d'un panneau (2) comprenant :
- une station (S_{E}) pour distribuer un mélange réactif liquide, ayant une densité (pl), destiné à la génération d'une couche intermédiaire (5) de mousse isolante dudit panneau (2), dans lequel, dans ledit mélange réactif liquide, une quantité de pourcentage souhaitée en volume (η) d'air ou d'un gaz pressurisé liquéfié est émulsifiable ;
- des moyens de fourniture et de guidage (19) pour la fourniture, à ladite station (S_{E}), selon des directions mutuellement convergentes respectives (D1, D2), d'un premier matériau en bande (4A) et d'un second matériau en bande (4B), qui sont des précurseurs de couches extérieures (3A, 3B) dudit panneau (2) ;
- des moyens de guidage et d'appui (9A, 10, 9B, 14 ; 12, 18 ; 18') configurés pour l'agencement et le maintien desdits premier (4A) et second (4B) matériaux en bande, à proximité de ladite station (S_{E}), selon des plans convergeant vers le bas de manière à délimiter une zone de trémie en forme de V (6) convergeant vers le bas, placée au-dessous de ladite station (S_{E}) pour la distribution de mélange réactif ;
- lesdits moyens de guidage et d'appui (9A, 10, 9B, 14; 12, 18 ; 18') étant configurés pour le déplacement desdits premier (4A) et second (4B) matériaux en bande pour les rapprocher progressivement l'un de l'autre de manière à définir, dans une région de fond de ladite zone de trémie (6), une fente étalonnée (7) pour faire glisser dans la direction de glissement et écraser simultanément ledit mélange réactif à des extrémités latérales opposées de ladite zone de trémie (6) ;
- lesdits moyens de guidage et d'appui (9A, 10, 9B, 14; 12, 18 ; 18') étant mutuellement ajustables en position pour le réglage, à ladite fente étalonnée (7), d'une distance (h) entre les surfaces intérieures desdits premier (4A) et second (4B) matériaux en bande en fonction d'une épaisseur souhaitée (H) et d'une densité finale (pp) de ladite couche intermédiaire (5) de mousse isolante qu'il est souhaité obtenir ;
- ladite station de distribution (S_{E}) comprenant une ou plusieurs têtes de mélange qui sont appropriées pour le remplissage au moins partiellement de ladite zone de trémie (6) avec ledit mélange réactif pour humidifier simultanément, symétriquement par rapport à un plan médian de ladite zone de trémie (6), lesdits premier (4A) et second (4B) matériaux en bande ;
- lesdits moyens de guidage et d'appui (9A, 10, 9B, 14 ; 12, 18 ; 18') étant en coutre configurés et ajustables pour la fourniture d'une action de guidage et d'appui continue et l'avancement synchrone desdits premier (4A) et second (4B) matériaux en bande sensiblement parallèlement l'un à l'autre à une distance mutuelle régulée d'abord le long d'une portion (T_{V}) qui est verticale ou qui a un angle d'inclinaison de +/-25 degrés par rapport à un plan vertical, pour faire glisser progressivement vers le bas ledit mélange réactif contenu dans ladite zone de trémie (6), puis le long d'une portion incurvée successive (Tc) de manière à détourner lesdits premier (4A) et second (4B) matériaux en bande vers une portion de transition presque horizontale (Tt) du chemin ;
- un premier plan d'appui et de guidage (P₁), agencé horizontalement et approprié pour le guidage et le support, de manière à pouvoir coulisser, dudit premier matériau en bande (4A), et un second plan d'appui et de guidage (P₂) approprié pour la fourniture d'une action d'appui et pour le guidage, de manière à pouvoir coulisser, dudit second matériau en bande (4B), ledit second plan d'appui et de guidage (P₂) étant incliné par rapport audit premier plan d'appui et de guidage (P₁) afin de faire avancer lesdits premier (4A) et second (4B) matériaux en bande d'une manière mutuellement divergente à une distance croissante l'un de l'autre le long de ladite portion de transition (Tt) du chemin de moussage le long de laquelle une expansion guidée dudit mélange réactif se développe ;
- des moyens de scellement élastiques (40), constitués de caoutchouc ou d'élastomère souple, montés de manière périphérique sur une partie desdits moyens de guidage et d'appui (9A, 10, 9B, 14 ; 12, 18 ; 18') et configurés pour presser chaque bord longitudinal (41) dudit second matériau en bande (4B) contre le bord longitudinal respectif (42) dudit premier matériau en bande (4A) pour contenir latéralement ledit mélange réactif ;
- une paire de dispositifs de transport (8A, 8B) qui sont espacés l'un de l'autre et parallèles, qui sont appropriés pour le transport et la fourniture d'une action d'appui auxdits premier (4A) et second (4B) matériaux en bande, avec la mousse en expansion interposée, le long d'une portion finale (Tf) d'un chemin sensiblement horizontal pour permettre l'accomplissement de la réaction de mousse et la stabilisation de la forme de la mousse.

11. Appareil selon la revendication 10, dans lequel lesdits moyens de guidage et d'appui comprennent un premier dispositif à courroie ou dispositif à lames articulées (9A), enroulé sur des moyens d'entraînement rotatifs (10) et mobile à une vitesse synchrone avec l'installation de moussage pour guider ledit premier matériau en bande (4A), des éléments de guidage façonnés (11) étant en outre prévus et appropriés pour se mettre en prise, de manière à pouvoir coulisser, avec les bords dudit dispositif à courroie mobile (9A), lesdits éléments de guidage (11) ayant une portion rectiligne (22) pour imprimer, audit dispositif à courroie mobile (9A), un profil rectiligne à ladite portion verticale ou très inclinée (T_{V}), et une portion incurvée inférieure (23) pour imprimer, audit dispositif à courroie mobile (9A), un profil incurvé concave à ladite portion incurvée (Tc) et transporter la portion incurvée (Tc) dans une direction qui est horizontale ou légèrement inclinée.

12. Appareil selon la revendication 11, comprenant en outre des ouvertures d'aspiration obtenues sur ledit dispositif à courroie mobile (9A) et des moyens de génération de vide (28) agencés pour aspirer l'air et transmettre le vide à travers lesdites ouvertures d'aspiration pour maintenir ledit premier matériau en bande (4A) en adhérence sur ledit dispositif à courroie mobile (9A) pendant l'avancement.

13. Appareil selon la revendication 10, dans lequel lesdits moyens de guidage et d'appui comprennent un élément d'appui et de guidage immobile (12) ayant une surface de guidage et d'appui (13) ayant une zone supérieure sensiblement plate (20), pour guider ledit premier matériau en bande (4A) le long de ladite portion verticale ou très inclinée (T_{V}), et une zone concave inférieure (21), pour guider ledit premier matériau en bande (4A) le long de ladite portion incurvée (T_{C}).

14. Appareil selon la revendication 13, dans lequel il est prévu, sur ladite surface de guidage et d'appui (13), des ouvertures à travers lesquelles il est possible de transmettre le vide en aspirant l'air pour maintenir ledit premier matériau en bande (4A) en adhérence, au cours du coulissement, sur ledit élément d'appui et de guidage immobile (12).

15. Appareil selon l'une quelconque des revendications 10 à 14, comprenant un autre dispositif à courroie mobile (9B) qui est approprié pour le guidage dudit second matériau en bande (4B), ledit autre dispositif à courroie mobile (9B) étant enroulé sur des moyens rotatifs (14) situés à des extrémités opposées respectives, et entraînés à la même vitesse d'entraînement synchrone.

16. Appareil selon la revendication 15, comprenant en outre un élément de contraste immobile (15) approprié pour la réception en appui dudit, et pour donner un profil souhaité audit, autre dispositif à courroie mobile (9B), ledit élément de contraste immobile (15) incluant une portion de surface plate (16), à ladite portion verticale ou très inclinée (T_{V}), et une portion de surface convexe (17), à ladite portion incurvée (T_{C}).

17. Appareil selon l'une quelconque des revendications 10 à 14, comprenant un élément de rouleau (18 ; 18') ou un tambour rotatif qui est approprié pour la fourniture d'une action de guidage et d'appui audit second matériau en bande (4B), ledit élément de rouleau (18 ; 18') ou élément de tambour rotatif ayant des dimensions telles qu'il s'étend sensiblement de ladite zone de trémie (6) jusqu'à proximité de ladite portion de transition (Tt).

18. Appareil selon l'une quelconque des revendications 10 à 17, comprenant en outre des moyens de pliage et de serrage mutuel des bords longitudinaux desdits premier (4A) et second (4B) matériaux en bande le long de ladite portion finale (Tf) du chemin pour contenir latéralement le mélange réactif en expansion.

19. Appareil selon l'une quelconque des revendications 10 à 18, comprenant en outre des moyens de scellement souples pour pincer les bords des matériaux en bande, et des moyens pour le réglage de la position réciproque desdits moyens de guidage et d'appui (9A, 10, 9B, 14 ; 12, 18 ; 18') afin d'ajuster ladite portion incurvée (Tc) dans le but de créer une zone d'expansion également le long de celle-ci.
